# EUROPEAN PATENT SPECIFICATION

(11) **EP 3 906 167 B1**
(45) Date of publication and mention of the grant of the patent: **28.06.2023**
(21) Application number: 19842445.9
(22) Date of filing: 16.12.2019
(51) Int. Cl.: B60B 9/26, B60B 9/28, B60B 9/24

(54) **WHEEL ASSEMBLY INCLUDING INNER AND OUTER RIM COUPLED HYDRAULIC DAMPERS AND RELATED METHODS**
RADANORDNUNG MIT EINEM INNEREN UND EINEM ÄUSSEREN FELGENGEKOPPELTEN HYDRAULISCHEN DÄMPFER UND ZUGEHÖRIGE VERFAHREN
ENSEMBLE ROUE COMPRENANT DES AMORTISSEURS HYDRAULIQUES ACCOUPLÉS À LA JANTE INTÉRIEURE ET À LA JANTE EXTÉRIEURE ET PROCÉDÉS ASSOCIÉS

(30) Priority: 31.12.2018 US 201816237478; 12.04.2019 US 201916383169; 08.10.2019 US 201916596302
(43) Date of publication of application: 10.11.2021
(73) Proprietor: GACW Incorporated, Chandler, AZ 85226 (US)
(72) Inventor: KEMENY, Zoltan, Chandler, Arizona 85226 (US)
(74) Representative: Style, Kelda Camilla Karen
(86) International application number: PCT/US2019/066521
(87) International publication number: WO 2020/142188

(56) References cited:
- EP-A1- 1 627 750
- BR-A- 9 702 701
- CN-A- 106 915 203
- GB-A- 121 898
- JP-A- S5 853 502
- JP-A- 2002 370 503
- KR-A- 20100 052 990
- US-A- 1 979 935
- US-A1- 2013 340 902
- US-A1- 2015 090 379

## Description

### Technical Field

The present invention relates to the field of wheels, and more particularly, to wheel assemblies for a vehicle and related methods.

### Background

A typical wheel may include a rim and tire surrounding the rim. The tire transfers a load of a vehicle from the axle through the wheel to the ground. Tires, for example, those found on most vehicles are pneumatic tires. In other words, a typical tire is pneumatically inflated, for example, with air or other gas, such as nitrogen. More particularly, air is injected into the space between the rim and the inside of the tire to inflate it.

During operation, being pneumatically inflated, a tire absorbs the forces as the vehicle travels over the road surface. The tire and associated inflation pressure may be selected to absorb the above-noted forces while reducing any deformation. However, in many instances, excessive forces placed on the tire may cause the tire and/or rim to deform, puncture, or blowout. Typical forces also cause tread wear of the tire, while excessive forces may also cause rapid tread wear that may lead to a shortened lifespan of the tire and decreased structural integrity of the wheel.

To address the shortcomings of pneumatic-based wheels, non-pneumatic wheels have been developed. By non-pneumatic, it is meant that air or other gas is not injected to inflate an interior volume of a tire. One approach to a non-pneumatic wheel uses mechanical springs. For example, U.S. Patent No. 911,975 to Gustafson discloses a spring wheel. Secondary spokes are arranged in pairs between pairs of main spokes and the members of each of the secondary spokes therefore pass upon opposite sides of a corresponding pair of intersecting braces. Each of the secondary spokes includes a pair of telescoping members that are pivotally connected at its outer end to ears formed on the hub and extends at its opposite end into a corresponding member.

U.S. Patent No. 1,601 ,518 to Weston discloses a resilient wheel that includes radial arms. Connection between a hub and rim members may be provided by pivot pins in outer ends of these arms that have links journaled thereon. The links are pivotally articulated with bent levers, which are in turn pivoted on bracket arms that extend inwardly from the part-circular plates, which are mounted on an inner periphery of a tire holding rim.

Another approach includes a disc between a wheel hub and outer rim. For example, U.S. Patent No. 1 ,808,886 to Courtney also discloses a disc or sidewall between a wheel hub and a rim. The disc is engaged by studs that project from the wheel hub and extends from an outer flange obliquely to the wheel hub. The disc assists the wheel tire and rim by resisting any tendency to become displayed laterally as a result of stresses occurring while the wheel is turning.

U.S. Patent No. 1,979,935 to Henap discloses a hydraulic spoke wheel. Each of the hydraulic spokes include telescoping sections in the form of an outer section and an inner section. The outer section has the stud projecting from one end. The inner section extends from the outer section and is equipped at its extended end with the stem.

U.S. Patent No. 6,041,838 to Al-Sabah discloses a wheel that includes spokes positioned in a spaced apart relation to each other. Each of the spokes has a first end connected to a rim and a second end connected to a plate member tip of a hub plate member in an offset position from the respective radial axis thereof. The offset position of each of the spokes is further defined by each of the spokes being connected to a respective one of the plate member tips at a predetermined angle (e.g., less than 90-degrees) from the radial axis thereof and defining an operative offset spoke axis, which intersects the radial axis of the plate member tips at the predetermined angle.

U.S. Patent No. 6,698,480 to Cornellier discloses shock absorbing spokes each having a central cylindrical tube. Each tube has an interior cap having an aperture and an exterior cap having an aperture. Each spoke has an interior piston, a rod with an aperture and a pin. The pin pivotably couples one of the spokes to the hub. Each spoke has an exterior piston, a rod with an aperture and a pin. The pin pivotably couples one of the spokes to the rim assembly. The interior pistons and exterior pistons divide the space within each tube into an interior chamber, an exterior chamber, and a central chamber.

Japanese Patent Application Publication No. 2002370503A discloses providing a wheel with a built-in suspension. A suspension-built-in wheel has a rim, a disc separated from the rim along the radial direction of the wheel, and a suspension mechanism having plural suspension elements, of which each has a spring and an absorber, arranged between the rim and the disk. A suspension-built-in wheel includes lateral force supporting mechanism. The suspension-built-in wheel also includes with a tilt mechanism.

Japanese Patent Application Publication No. S5853502A discloses a rotating body with structure built-in mechanism for absorbing and buffering shock. A rotating body receives power directly from a rotating shaft joined to a machine and rotates together with the rotating shaft. The rotating body is divided into an inner wheel and an outer wheel, and the inner wheel is secured to the rotating shaft by a key. Sixteen coil springs and four shock absorbers are arranged between the inner and outer wheels to fix them to each other. In this arrangement, when shock is exerted on the rotating body, the coil springs and the shock absorbers are constricted on the side where shock has been exerted, and those on the other sides are extended to absorb the shock. Thus, it is not required to provide an absorbing apparatus separately, and therefore the installing space can be reduced.

Korean Patent Application Publication No. 20100052990A discloses a non-pneumatic tire integrated wheel structure to which a non-pneumatic tire supports a vehicle without using air pressure is applied. A non-pneumatic tire having a rim formed therein with a space. A drum installed in the space portion of the rim so as to be spaced apart from the rim; a bearing installed between the rim and the drum; an axle coupling portion installed inside the drum and having a hub connected to the axle therein; a pair of vertical movement links installed at upper and lower inner portions of the drum and connecting the axle coupling portion and the drum; and a pair of suspensions which connect the pair of cantilever and the drum to the axle coupling portion in a symmetrical structure, respectively. Therefore, safety by the non-air tire is secured, and the shock transmitted along the rotation direction through the relative rotation of the non-air tire with respect to the axle portion can be alleviated, and the vertical movement link and the suspension absorb the vibration in the vertical direction. Of course, since the movement in the other direction is blocked, the riding comfort is improved.

Despite advances in pneumatic tire wheels, and non-pneumatic tire wheels, there is still a need for improvements in wheel technology, particularly, for large construction vehicles, or mining vehicles, for example. The expense of wheel replacement, and the downtime experienced during wheel replacement may add significant expenses to the construction or mining projects.

### Summary

A wheel assembly to be coupled to a hub of a vehicle includes an inner rim to be coupled to the hub of the vehicle and an outer rim surrounding the hub. The wheel assembly also includes a plurality of gas springs operatively coupled between the inner rim and the outer rim to provide a gas suspension for relative movement between the inner rim and the outer rim. The wheel assembly also includes a plurality of hydraulic dampers operatively coupled between the inner rim and the outer rim.

The wheel assembly further includes an inner ring coupled to the inner rim and defining a closeable gap with adjacent portions of the outer rim to define a mechanical stop to limit relative movement of the inner rim and outer rim. The plurality of hydraulic dampers may be arranged in a staggered relation on opposite sides of the inner ring, for example.

The plurality of gas springs are arranged in pairs on opposite sides of the inner ring, for example. Each hydraulic damper is coupled between the inner rim and the outer rim adjacent corresponding pairs of the plurality of gas springs.

Each hydraulic damper may be aligned side-by-side with a corresponding one of the plurality of gas springs. Each hydraulic damper may be coupled to the outer rim between pairs of the plurality of gas springs, for example.

The plurality of hydraulic dampers may include a plurality of oil dampers, for example. Each hydraulic damper may include a double-acting hydraulic cylinder and associated piston, for example. Each hydraulic damper may include a piston head coupled to the piston and at least one reed valve adjacent the piston head.

The wheel assembly may include a plurality of inboard lateral stops coupled between an inboard side of the outer rim and an inboard side of the inner rim, and a plurality of outboard lateral stops coupled between an outboard side of the outer rim and an outboard side of the inner rim. The plurality of inboard lateral stops may include a plurality of inboard hinge retainers, and the plurality of outboard lateral stops may include a plurality of outboard hinge retainers.

A method aspect is directed to a method of making a wheel assembly to be coupled to a hub of a vehicle as defined in independent claim 12. Preferred embodiments of such a method are defined in dependent claims 13-15.

### Brief Description of the Drawings

FIG. 1 is a side view of a vehicle having wheel assemblies according to an embodiment.
FIG. 2 is a perspective view of a wheel assembly according to an embodiment, which is not an embodiment according to the present invention.
FIG. 3 is another perspective view of the wheel assembly of FIG. 2.
FIG. 4 is another perspective view of the wheel assembly of FIG. 2.
FIG. 5 is a perspective view of a portion of the wheel assembly of FIG. 2.
FIG. 6 is a perspective view of the inner rim, disk, and attachment brackets of the wheel assembly of FIG. 2.
FIG. 7 is a perspective view of a portion of a wheel assembly including tread assemblies and a removable sidewall in accordance with an embodiment, which is not an embodiment according to the present invention.
FIG. 8 is a perspective view of a portion of the wheel assembly of figure 7.
FIG. 9 is another perspective view of a portion of the wheel assembly of figure 7.
FIG. 10 is a perspective view of the tread member support of FIG. 9.
FIG. 11 is a perspective view of a portion of the tread assembly of FIG. 9.
FIG. 12 is a perspective view of a tread member of the tread assembly of FIG. 9.
FIG. 13 is a perspective view of an inboard clamping member of a wheel assembly.
FIG. 14 is a perspective view of an outboard clamping member of a wheel assembly.
FIG. 15 is a perspective view of a portion of a wheel assembly including outboard clamping members in accordance with an embodiment.
FIG. 16 is a cross-sectional view of a portion of an outer rim, retaining feature, and tread assembly in accordance with an embodiment.
FIG. 17 is a cross-sectional view of a portion of a tread assembly in accordance with another embodiment.
FIG. 18 is a perspective view of a wheel assembly in accordance with another embodiment, which is not an embodiment according to the present invention.
FIG. 19 is a schematic diagram of the lateral stops of FIG. 18.
FIG. 20 is a schematic diagram of a portion of a wheel assembly including a local controller for controlling an operating response of a gas spring in accordance with an embodiment.
FIG. 21 is a schematic diagram of a portion of a wheel assembly including a local controller for controlling an operating response of a gas spring in accordance with another embodiment.
FIG. 22 is a perspective view of an inboard removable sidewall of the wheel assembly in accordance with an embodiment.
FIG. 23 is a perspective view of an outboard removable sidewall of a wheel assembly in accordance with an embodiment.
FIG. 24 is a perspective view of a wheel assembly in accordance with another embodiment of an outboard removable sidewall.
FIG. 25 is a schematic diagram of a portion of a wheel assembly including a sensor for measuring distance between the inner and outer rims in accordance with another embodiment.
FIG. 26 is a side cut-away view of a portion of a wheel assembly in accordance with another embodiment, which is not an embodiment according to the present invention.
FIG. 27 a perspective cut-away view of the portion of the wheel assembly of FIG. 26.
FIG. 28 is a perspective view of a cover ring and flexible seal of FIG. 27.
FIG. 29 is another perspective view of the cover ring and flexible seal of FIG. 27.
FIG. 30 is a perspective view of the flexible seal of FIG. 27.
FIG. 31 is a perspective view of another cover ring and flexible seal of FIG. 27.
FIG. 32 is a perspective view of a portion of a wheel assembly according to another embodiment, which is not an embodiment according to the present invention.
FIG. 33 is a perspective view of an inboard lateral stop of the wheel assembly of FIG. 32.
FIG. 34 is a perspective view of a wheel assembly according to another embodiment, which is not an embodiment according to the present invention.
FIG. 35 is a perspective view of a portion of the wheel assembly of FIG. 34 and without weight-reduction openings in the inner ring.

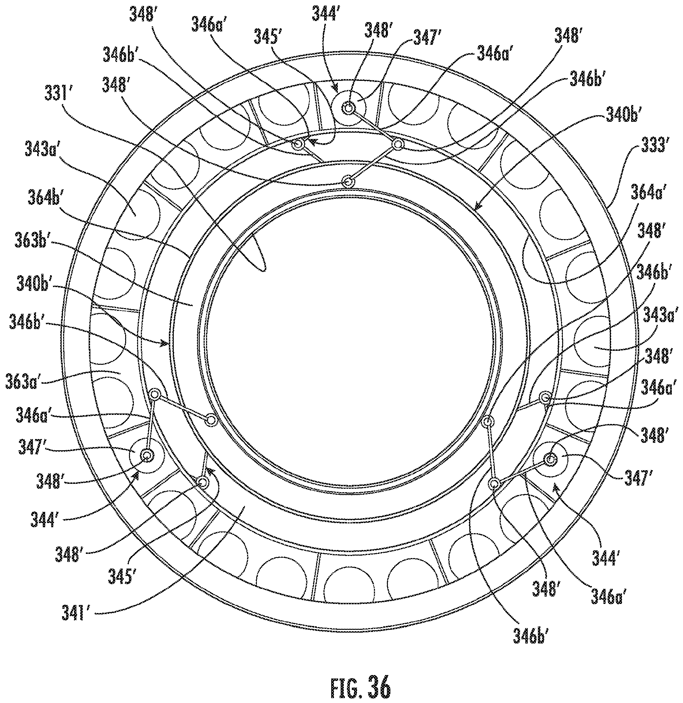

FIG. 36 is a side view of the portion of the wheel assembly of FIG. 35.
FIG. 37 is a perspective view of inboard and outboard lateral stops of the wheel assembly of FIG. 34.
FIG. 38 is a perspective view of a portion of a wheel assembly in accordance with an embodiment according to the present invention.
FIG. 39 is another perspective view of a portion of a wheel assembly in accordance with an embodiment according to the present invention.
FIG. 40 is an exploded view of a portion of a hydraulic damper of a wheel assembly.
FIG. 41 is a side view of a portion of a hydraulic damper of a wheel assembly.
FIG. 42 is a perspective view of a portion of a wheel assembly in accordance with another embodiment according to the present invention.

### Detailed Description

The present invention will now be described more fully hereinafter with reference to the accompanying drawings. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

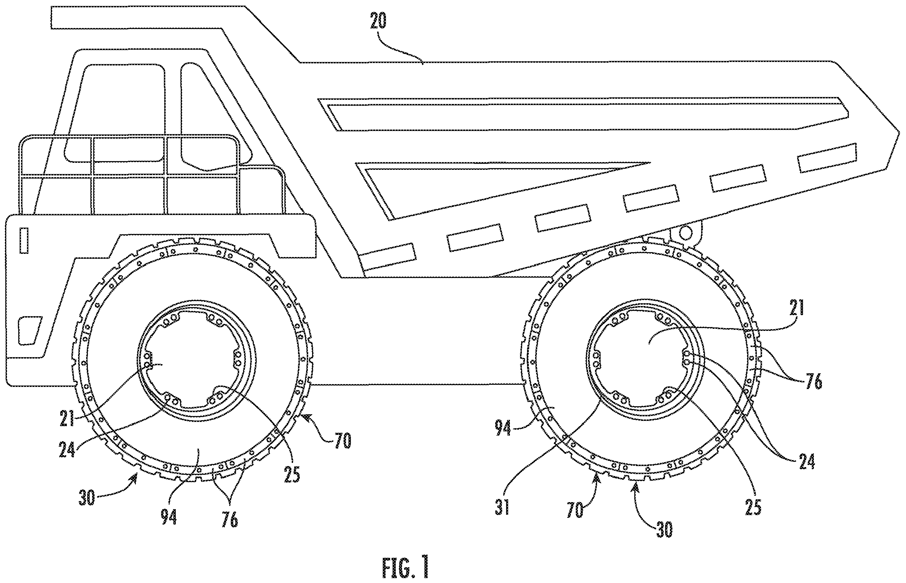

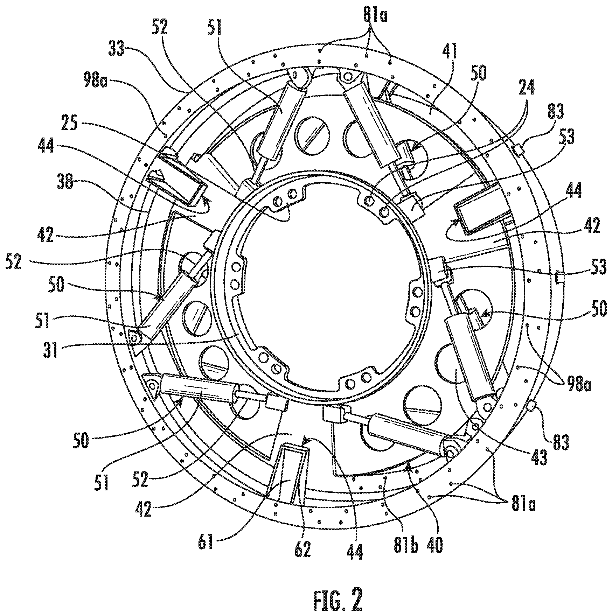

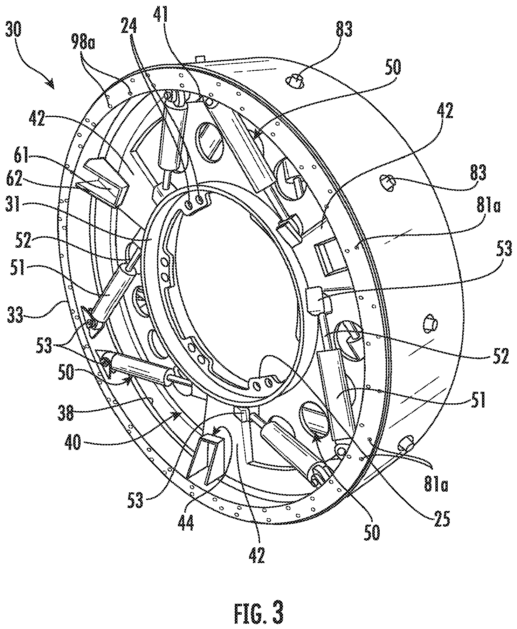

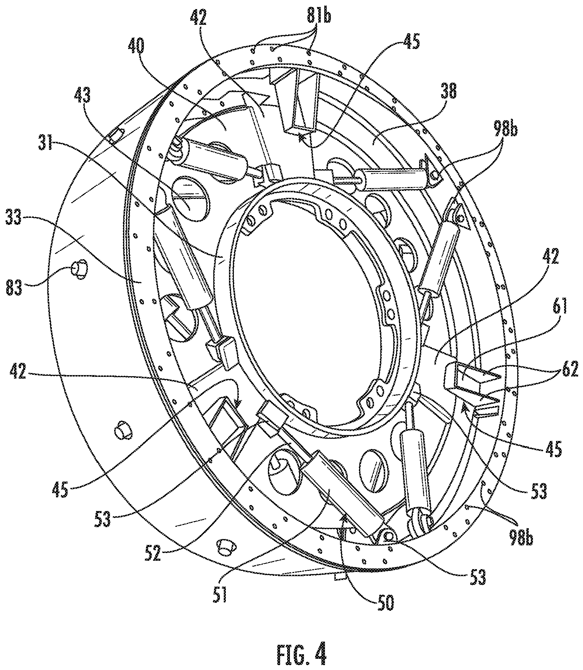

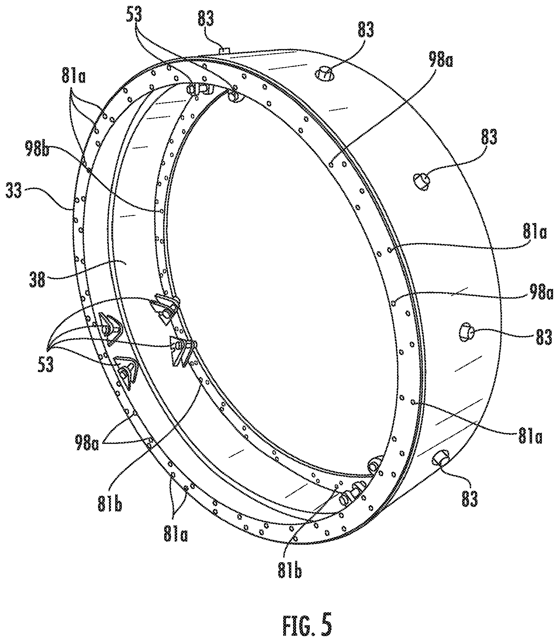

Referring initially to FIGS. 1-5, a wheel assembly **30** to be coupled to a hub **21** of a vehicle **20** includes an inner rim **31** to be coupled to the hub of the vehicle. The inner rim **31** may be coupled to the hub **21** of the vehicle **20** with fasteners through fastener receiving passageways **24** within an inwardly extending flange ring **25.** Illustratively, the flange ring **25** is centered laterally within the inner rim **31,** but may be positioned in another arrangement based upon a desired mounting arrangement with the hub **21.** Other coupling arrangements may be used to couple the inner rim **31** to the hub **21.**

The wheel assembly **30** also includes an outer **33** rim surrounding the inner rim **31.** The outer rim **33** may have a diameter of at least 106.7 cm (3.5 feet). and more particularly, at least 121.9 cm (4 feet). Those skilled in the art will appreciate that with a diameter of at least 106.7 cm (3.5 feet), the wheel assembly **30,** and more particularly, the outer rim **33** may be particularly advantageous for relatively large or heavy machinery, such as, for example, earth excavation equipment and mining equipment. A typical overall outer diameter of such a wheel assembly be 254 cm (100 inches) or greater. The outer rim **33** may have an increased thickness portion **38** along an inner circumference thereof. The increased thickness portion **38** may be provided by welding a separate reinforcing ring in position or it may be integrally formed with the outer rim **33,** for example.

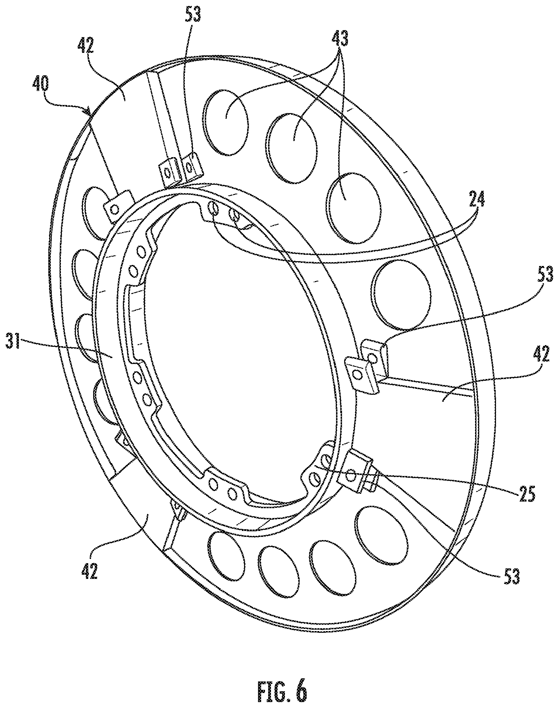

Referring additionally to FIG. 6, a disk **40** is coupled to the inner rim **31** and defines a closeable gap **41** with adjacent interior portions of the outer rim **33.** The disk **40** also includes weight-reduction openings **43** therein. The weight-reduction openings **43** each illustratively have a generally round or circular shape. The weight-reduction openings **43** may have another shape, such as oblong, hexagonal, and/or contoured for stress reduction, for example. Those skilled in the art will appreciate that having a reduced weight may increase the fuel efficiency of the vehicle **20** and/or may increase the lifespan of wheel assembly **30.**

The disk **40** also includes spaced apart thickened wall portions **42.** The spaced apart thickened wall portions **42** may be on both the inboard and outboard surfaces of the disk **40.** Each thickened wall portion **42** may provide increased strength or support as a coupling or attachment point, and/or to accept increased stresses thereat as will be described in further detail below. The thickened wall portions **42** may be provided by welding an additional metal body in position, for example, or they may be integrally formed with the disk **40.** Those skilled in the art will appreciate that the thickened wall portions **42** may be in the form of solid extensions (i.e., integrally formed with and/or a build-up of) of the disk **40,** and/or discrete bodies, for example, that function as mechanical stiffeners.

The inner rim **31,** outer rim **33,** and disk **40** may be formed of a high strength and rugged material, such as steel. As will be appreciated by those skilled in the art other materials may also be used.

Gas springs **50** are operatively coupled between the inner rim **31** and the outer rim **33.** Each gas spring **50** may be a double-acting gas spring, for example, and include a double-acting gas cylinder **51** and an associated piston **52.** Of course, in some embodiments, each gas spring **50** may be a single-acting gas spring. More than one type of gas spring may be used. The gas springs **50** may be air springs and/or nitrogen springs, for example. The gas springs **50** may include other gasses as well.

Illustratively, the gas springs **50** are arranged in pairs on opposite sides of the disk **40.** More particularly, the gas springs **50** diverge outwardly from the inner rim **31** to the outer rim **33.** A respective attachment bracket **53** for each gas spring **50** is coupled to a respective thickened wall portion **42** of the disk **40,** for example, adjacent the inner rim **31.** Each attachment bracket **53** may include a generally U-shaped or V-shaped base bracket that receives an end of the piston **52** therein (e.g., between the arm of the U- or V-shaped bracket). A fastener fastens the end of the piston **52** of the gas spring **50** to the base bracket and thus, each gas spring is coupled adjacent the respective thickened wall portion **42** of the disk **40** and adjacent the inner rim **31.** A similar attachment bracket **53** is coupled to the outer rim **33** adjacent inboard and outboard surfaces. Accordingly, the gas springs **50** are pivotably coupled between the inner and outer rims **31, 33.**

As will be appreciated by those skilled in the art, the gas springs **50** provide a gas suspension for relative movement between the inner rim **31** and the outer rim **33.** The gas springs **50** have an operating stroke the permits the disk **40** to define a mechanical stop. In other words, the gas springs **50** maintain the outer rim **33** spaced apart from the inner rim **31.** However, if pressure on any gas spring **50** causes the gas spring to reach its limit under load or the gas spring fails, the disk **40** may act as a mechanical stop to limit relative movement of the inner and outer rims **31, 33.** In other words, the disk **40** and gas springs **50** may considered as providing a run-flat capability.

Initial charge pressures of the gas springs **50,** for example, when the gas springs are in the form of double-acting gas springs, will now be described, for example, with respect to initial pressures in the wheel assembly **30** when there are little or no external loads applied thereto (i.e., free-wheel). In particular, the chamber associated with the piston-side of the cylinder **51** is typically smaller (e.g., by about 10%) than the chamber associated with the full-bore side of the cylinder. Thus, when the piston **52** is centered within the cylinder **51** so that there is a relatively equal stroke in tension and compression, the piston-side chamber pressure is higher (e.g., by about 10%) than the full-bore side chamber pressure.

Thus, while equal pressure charging of the double-acting gas cylinder **51** may be convenient, it results in an offset piston **52,** which, in turn, results in an offset force to be applied to assemble the gas springs **50** within the wheel assembly **30.** To accomplish this, the inner and outer rims **31, 33** may be temporarily fixed in a rigid jig. However, using a rigid jig may make replacement of the gas springs **50** in the field increasingly difficult. Thus, to address increased ease of in-field replacement of the gas springs **50,** weld-on rings may be coupled to the inner and outer rims **31, 33** and to turn-buckles to temporarily lock the inner and outer rims in place. A similar arrangement may be used in-shop as well, as will be appreciated by those skilled in the art.

Accordingly, the result is a pre-stressed inner rim **31** suspension to the outer rim **33.** The pre-stressing may ensure that the lateral stops **44, 45** (described below) are not active or under pressure. With different charge pressures, the suspension can be pre-compressed. While tension suspension and compression suspension may be considered equivalent, tension suspension may be particularly advantageous over compression suspension, as will be appreciated by those skilled in the art.

Another assembly technique may include applying a higher charge pressure (e.g., about 10% more) at the piston-side to center the piston **52** at about the half-stroke position. This results in there being no initial load on the gas spring **50** at the wheel assembly **30** and facilitates assembly without the temporary fixing within a jig. Thus, the wheel assembly **30** may be considered to be neither pre-stressed, nor pre-compressed, but neutral. For example, a higher full-bore side chamber pressure may be applied (e.g., about 10% higher) than the piston side chamber pressure. Gas may be released from the full-bore side chamber until the piston **52** becomes centered relative to full-stroke. Alternatively, a higher piston-side chamber pressure may be applied (e.g., about 10% higher) than the full-bore side chamber pressure. Releasing gas from the cylinder **51** may be considered easier than surcharging, however, this may use more gas (e.g., nitrogen) than other approaches resulting in an increased cost.

The wheel assembly **30** also includes inboard lateral stops **44** carried by an inboard surface of the outer rim **33.** More particularly, the inboard lateral stops **44** are positioned adjacent the thickened wall portion **42.** The wheel assembly **30** also includes outboard lateral stops **45** carried by an outboard surface of the outer rim **33.** Similarly to the inboard lateral stops **44,** the outboard lateral stops **45** are adjacent the thickened wall portion **42.** Each thickened wall portion **42** is positioned between a pair of inboard and outboard lateral stops **44, 45.** The inboard and outboard lateral stops **44, 45** together with the outer rim **33** may conceptually be considered to be in the form of an L-shaped bracket. Illustratively, the inboard and outboard lateral stops **44, 45** each has a support plate **61** (e.g., having a rectangular shape) that is transverse to the outer rim **33** and has triangular side members **62.**

As will be appreciated by those skilled in the art, the inboard and outboard lateral stops **44, 45** cooperate to limit relative lateral movement of the disk **40** and the outer rim **33.** In other words, turning, for example, of the vehicle **20** may cause lateral movement of the disk **40** relative to the outer rim **33.** The inboard and outboard lateral stops **44, 45** may limit the amount of lateral movement of the disk **40** relative to the outer rim **33** to thereby maintain structural integrity of the wheel assembly **30.** Of course, the inboard and outboard lateral stops **44, 45** include other and/or additional components or elements that cooperate to limit relative lateral movement of the disk **40** and the outer rim **33.**

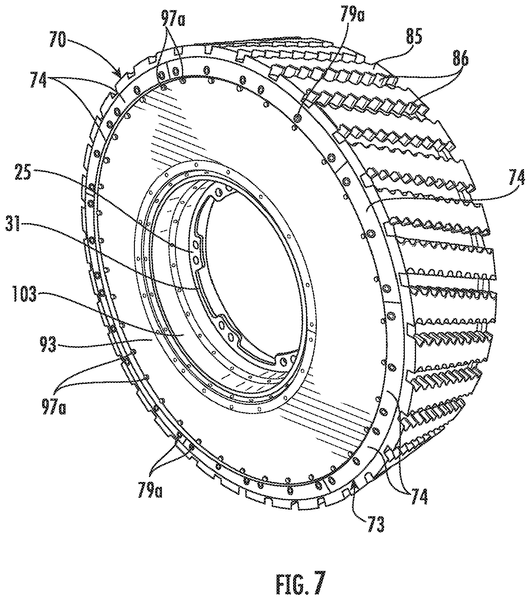

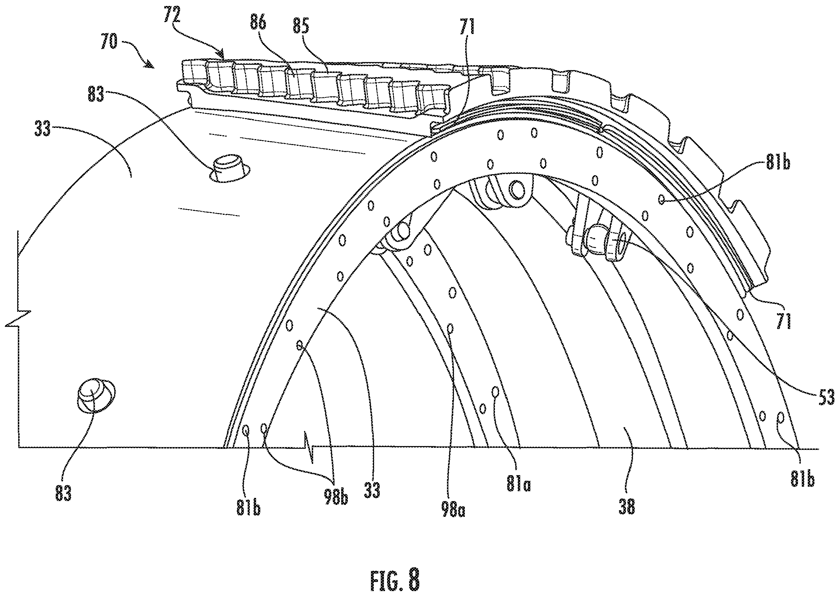

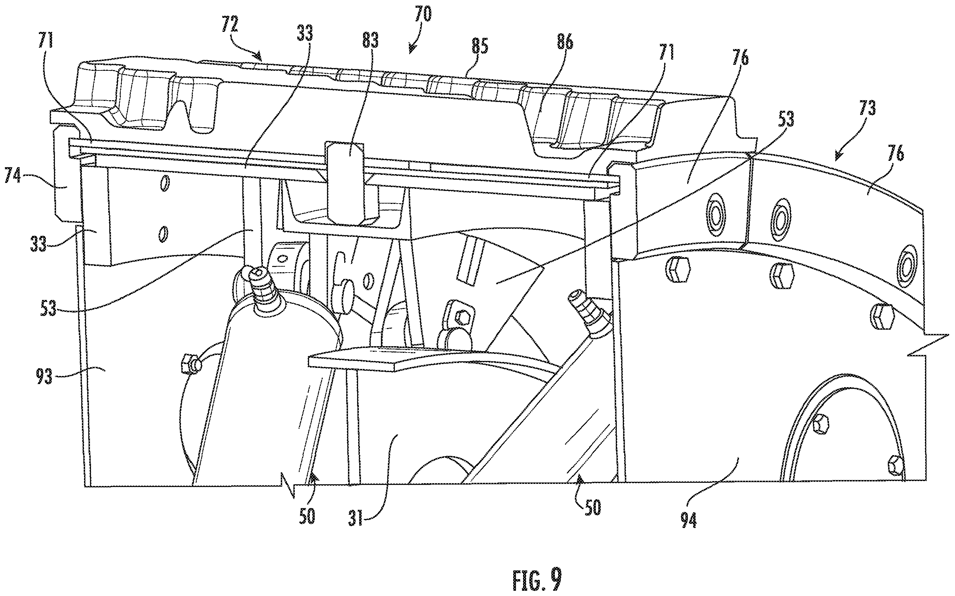

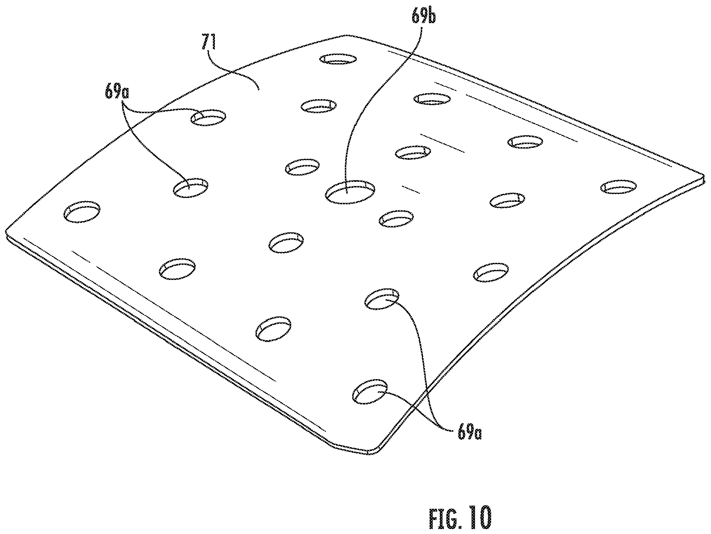

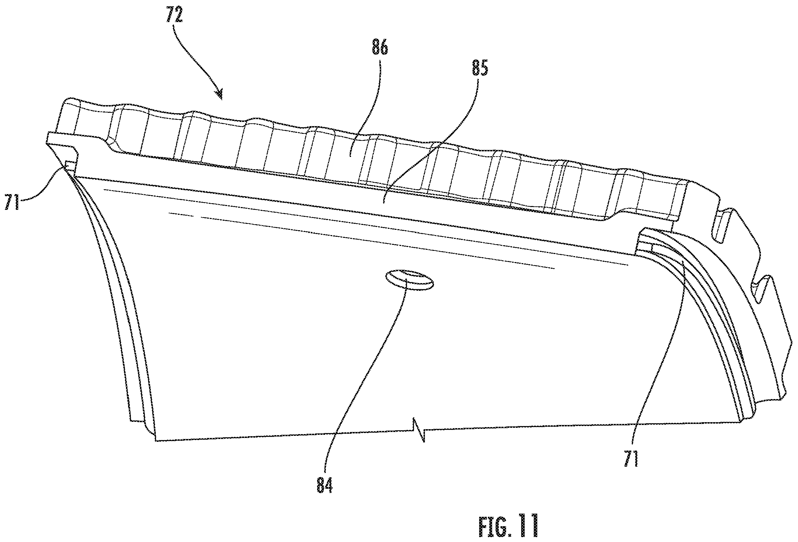

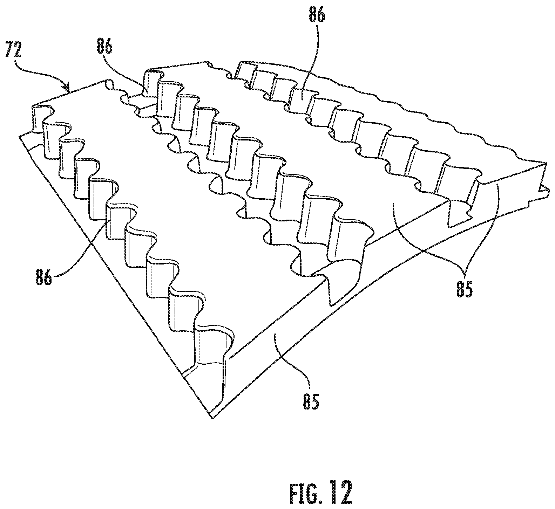

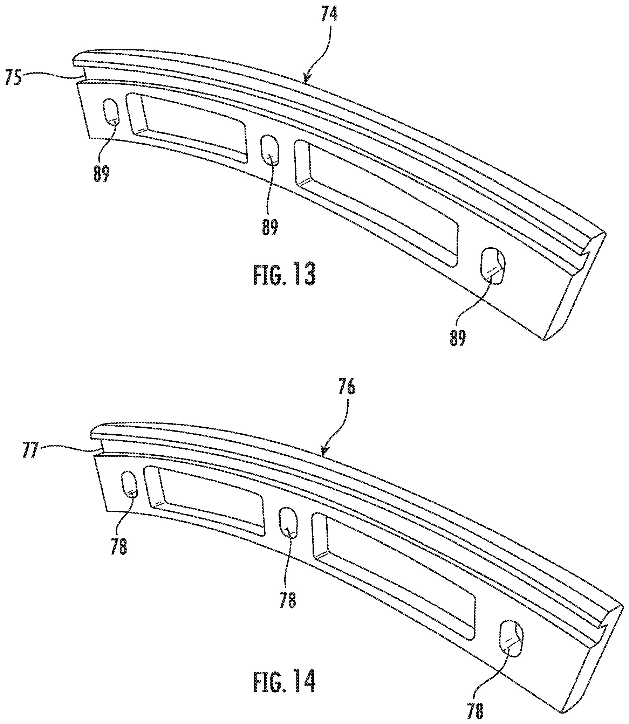

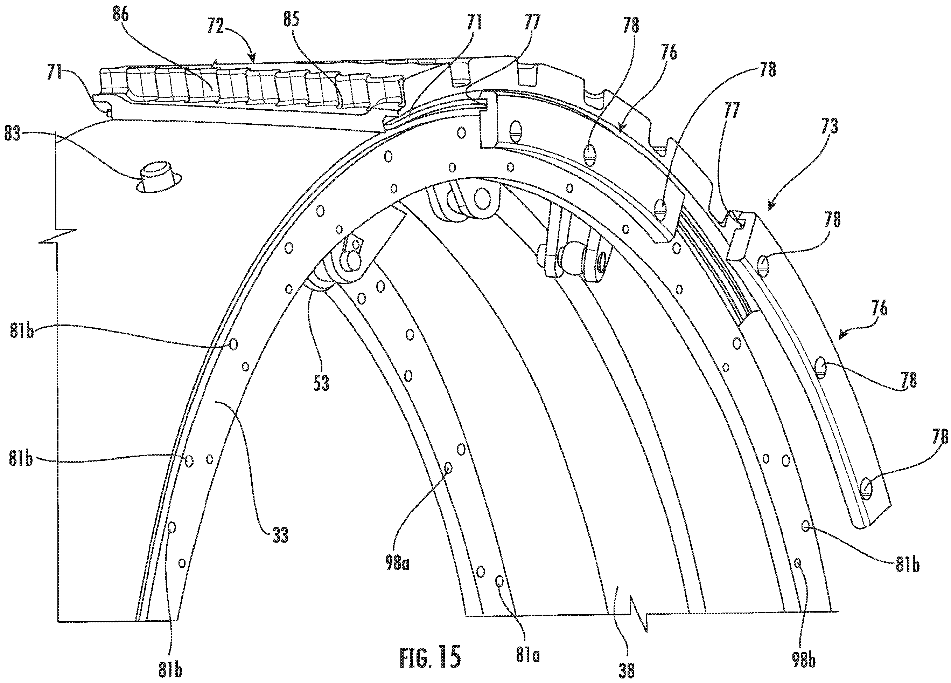

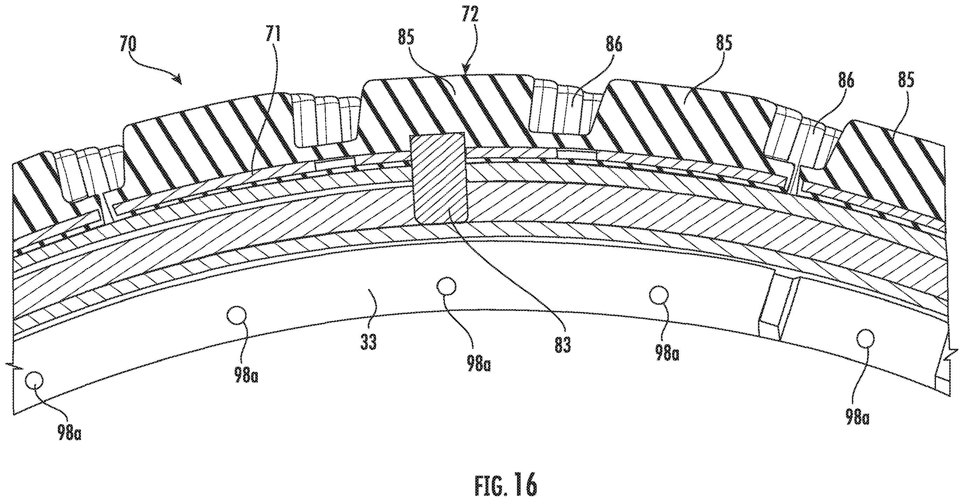

Referring now additionally to FIGS. 7-16, the wheel assembly **30** illustratively includes tread assemblies **70** carried by the outer rim **33.** Each tread assembly **70** includes a tread member support **71.** Each tread member support **71** may be in the form of an arcuate metal plate with openings **69a, 69b** therein (FIG. 10) and may couple to an outer circumference of the outer rim **33.** One or more of the tread member supports **71** may be a flat plate in other embodiments. A center one of the openings **69b** may receive a pin **83** therein as will be described in further detail below. In some embodiments, the tread member support **71** may not be metal, such as steel. Those skilled in the art will appreciate that given the arcuate shape of the tread member support **71,** several tread assemblies **70** are coupled in end-to-end relation around the outer rim **33.**

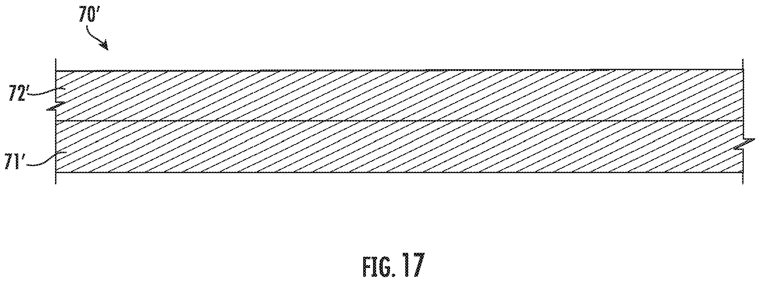

A tread member **72** is coupled or bonded, for example, glued, fastened, etc., to the tread member support **71,** and a clamping arrangement **73** removably securing the tread member support to the outer rim **33.** There may be more than one tread member **72** bonded to the tread member support **71.** The tread member **72** includes a resilient body **85** that has tread pattern **86** defined in an outer surface thereof. The resilient body **85** may include rubber or other material, which may be selected based upon desired friction, traction, or other characteristics, for example, based upon the use of the vehicle **20.** The material of the tread member **72** may a metal such as steel, in other embodiments. The tread pattern **86** may similarly be selected based upon desired traction or other characteristics, for example, based upon the use of the vehicle **20.** Moreover, referring briefly to FIG. 17, in another embodiment, each tread member **72'** and tread member support **71'** may include a common material integrally formed as a monolithic unit, which may or may not be metal, such as steel. In other words, each tread member **72'** and tread member support **71'** define a single unit or body of the same material (e.g., an all-metal tread member support and tread member).

Further details of the clamping arrangement **73** will now be described. The clamping arrangement **73** illustratively includes inboard clamping members **74** coupled to the inboard side of the outer rim **33.** The inboard clamping members **74** each have a first slotted recess **75** receiving adjacent portions of the tread member support **71.** The inboard clamping members **74** are removably coupled to the inboard side of the outer rim **33.** The inboard clamping members **74** are illustratively arranged in an end-to-end relation and each coupled to adjacent respective portions of the outer rim **33.** In some embodiments, the inboard clamping members **74** may be fixed, for example, welded or fixedly coupled, to the inboard side of the outer rim **33** and/or a single inboard clamping member may be used.

The inboard clamping members **74** are coupled to the inboard side of the outer rim **33** by way of fasteners **79a**, for example, threaded fasteners to facilitate removal and replacement, for example, when tread members **72** wear or it is desirable to replace the tread members. The threaded fasteners **79a** may extend through openings **89** in the inboard clamping members **74** and engage corresponding threaded openings **81a** in the outer rim **33.**

The clamping arrangement **73** also illustratively includes outboard clamping members **76** coupled to the outboard side of the outer rim **33.** Similar to the inboard clamping member **74,** the outboard clamping members **76** each has a second slotted recess **77** therein receiving adjacent portions of the tread member support **71.** The outboard clamping members **76** are removably coupled to the outboard side of the outer rim **33.** The outboard clamping members **76** are illustratively arranged in an end-to-end relation and each coupled to adjacent respective portions of the outer rim **33.** In some embodiments, a single outboard clamping member **76** may be coupled to the outboard side of the outer rim **33** and extend the circumference of the outer rim.

The outboard clamping members **76** are coupled to the outboard side of the outer rim **33** by way of fasteners, for example, threaded fasteners to facilitate removal and replacement, for example, when tread members **72** wear, or it is desirable to replace the tread members. The threaded fasteners may extend through openings **78** in the outboard clamping members **76** and engage corresponding threaded openings **81b** in the outer rim **33.**

The tread member support **71** and adjacent portions of the outer rim **33** (e.g., along the outer circumference) define a retaining feature therebetween. The retaining feature is illustratively in the form of or includes a pin **83** carried by the outer rim **33** and a pin-receiving opening **84** in the tread member support **71.** The pin **83** and the pin-receiving opening **84** may advantageously prevent relative movement between the tread member support **71** and the outer rim **33,** and also facilitate replacement (e.g., easy alignment) of the tread members **72,** for example, thereby reducing downtime of the vehicle **20.**

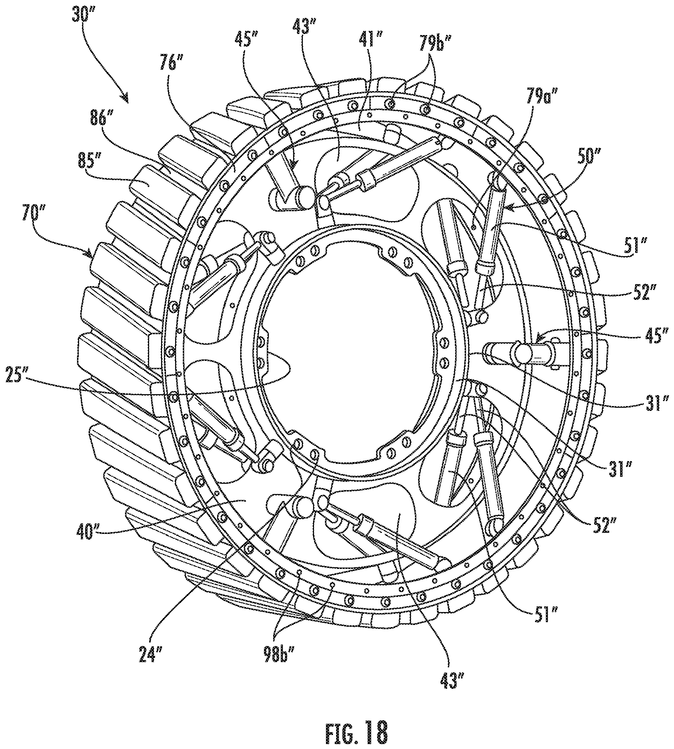

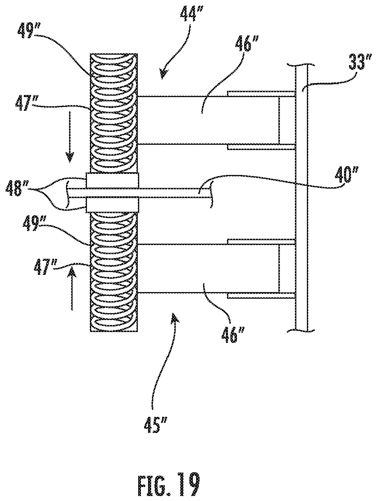

Referring now briefly to FIGS. 18 and 19, in another embodiment, the inboard and outboard lateral stops **44", 45"** are biased toward the disk **40".** More particularly, the inboard and outboard lateral stops **44", 45"** each includes an arm **46"** extending radially inward from the inboard and outboard interior surfaces of the outer rim **33".** A transverse arm **47"** is coupled to an end of each arm **46".** Each transverse arm **47"** carries a plug **48"** that is biased toward the disk **40"** by a biasing member **49",** for example, a spring, such as a coil spring. Other biasing arrangements may be used.

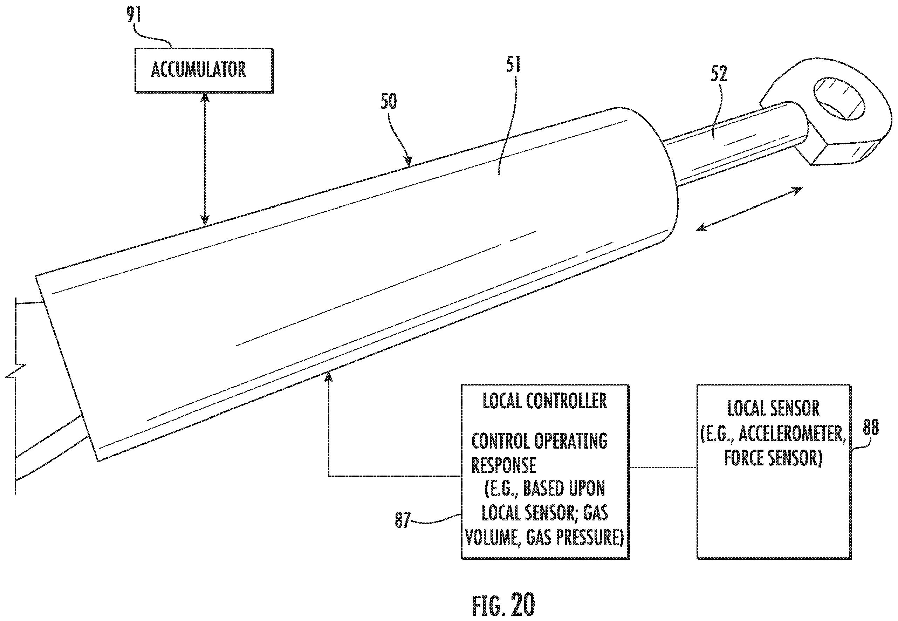

Referring now additionally to FIG. 20, one or more of the gas springs **50** may have a controllable response. For example, the gas springs **50** may have either or both of a controllable gas pressure and a controllable gas volume. Any number of the gas springs **50** may have a controllable response. By having a controllable response, each of the gas springs **50** may be operated or controlled as will be explained in further detail below, for example, with respect to certain operating conditions and/or environments. More particularly, the wheel assembly **30** may include a local controller **87** (e.g., including a processor and/or circuitry) that is coupled to the gas springs **50.** The local controller **87** may be coupled to any number of gas springs **50.** The local controller **87** may be carried within the outer rim **33,** for example, inside the outer rim, or by the disk **40.** The local controller **87** may be carried by other elements of the wheel assembly **30.** The local controller **87** may also include respective actuators and/or valves to control the response of the gas springs **50** and cooperate with an accumulator **91** also coupled to the gas springs to act as a pressure and/or volume storage reservoir for gas springs.

The wheel assembly **30** may also include a local sensor **88** coupled to the local controller **87.** The local controller **87** may control (e.g., monitor and/or adjust) the operating response of the gas springs **50** based upon the local sensor **88.** For example, the local controller **87** may adjust the pressure or volume of the gas springs **50** without controlling the operation (e.g., extend/retract) of the gas springs. The local controller **87** may also adjust, for example, alternatively or additionally, the operation (e.g., extend/retract) of the gas springs **50.**

The local sensor **88** may be an acceleration sensor, for example, and cooperate with the local controller **87** to control the controllable response of the gas springs **50** based upon a sensed acceleration (e.g., braking, turning, etc.). The local sensor **88** may be another type of sensor, for example, a force sensor. There may be more than one local sensor **88.** In some embodiments, the local controller **87** may cooperate with the local sensor **88** to generate a notification, for example, when a sensed value exceeds a threshold. The notification may be communicate within the vehicle **20** (e.g., in the cab) or remotely from the vehicle. In other words, the local controller **87** may cooperate with the local sensor **88** independently from or without controlling the operating response of the gas springs **50.**

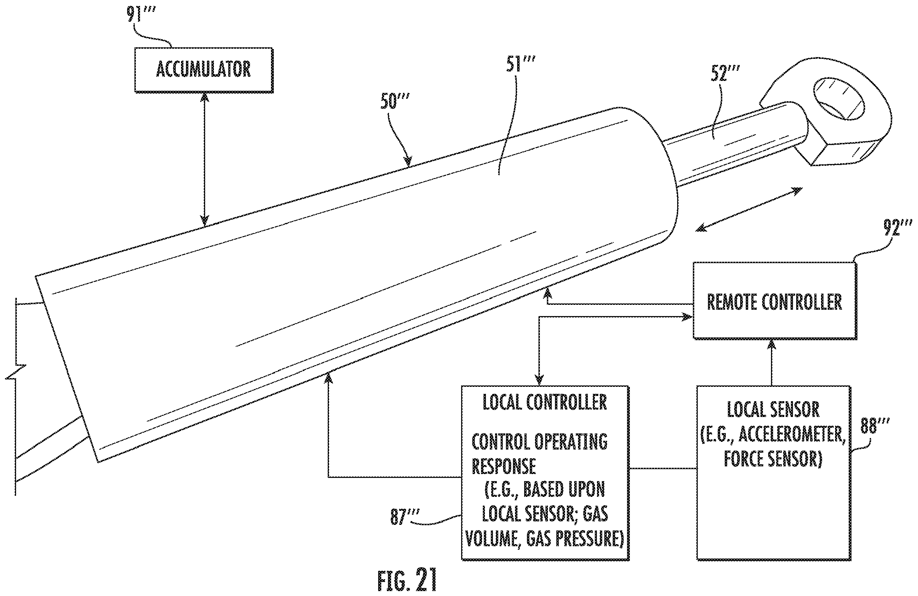

Referring now briefly to FIG. 21, in another embodiment, a remote controller **92‴** may be carried remote from the wheel assembly **30,** for example, within a wheel well of the vehicle **20** or within the truck cab. The remote controller **92‴** may cooperate with the local sensor **88‴** or other sensor, for example, remote from the wheel assembly **30.** The remote controller **92‴** may also cooperate with the local controller **87‴** to effectuate a change in the operating response of the gas springs **50'".** Wiring from the remote controller **92‴** may extend to the local controller **87'",** and/or the remote controller may wirelessly communicate with the local controller.

Those skilled in the art will appreciate that the local controller **87** controls the operating response of the gas springs **50** while the wheel assembly **30** is rolling. For example, if the vehicle **20,** during motion thereof, makes a relatively sharp turn or applies the brakes, the local controller **87** may independently control the operating response of each or selected ones of the gas springs **50** based upon the turn or braking (e.g., increase pressures in the gas springs of front wheel assemblies). Other motion of the vehicle **20** may cause changes in the operating response, such as, for example, failure of any of the gas springs **50,** debris in the tread members **72,** and/or contact of the disk **40** with the outer rim **33.**

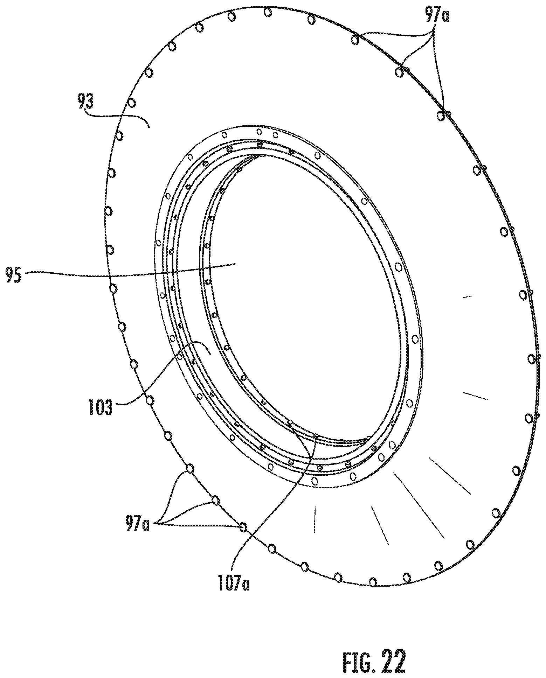

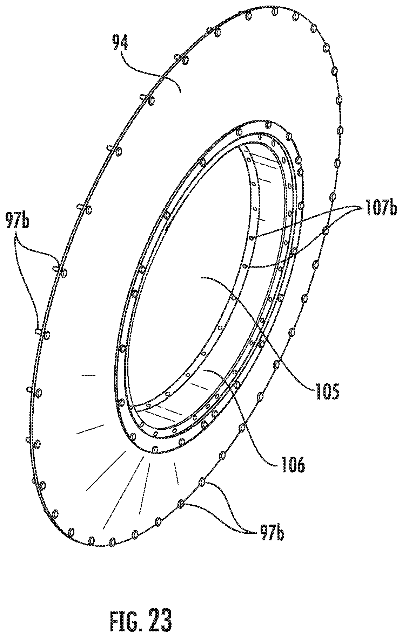

Referring now additionally to FIGS. 22 and 23, the wheel assembly **30** may include inboard and outboard removable sidewalls **93, 94.** The inboard and outboard removable sidewalls **93, 94** are each illustratively in the form of a round or circular cover carried by the outer rim **33.** More particularly, the inboard and outboard removable sidewalls **93, 94** each has an opening **95, 105** therein to permit, for example, coupling of the wheel assembly **30** to the hub **21.** Respective flanges **103, 106** extend inwardly within the openings **95, 105.** The inboard and outboard removable sidewalls **93, 94** may each be coupled to the inboard and outboard sides of the outer rim **33** by way of fasteners **97a, 97b** and to the inner rim **31** also by way of fasteners **107a, 107b.** The fasteners **97a, 97b** may be received through fastener receiving passageways along the outer circumference of each of the inboard and outboard removable sidewalls **93, 94** and fasten to corresponding respective aligned threaded passageways **98a, 98b** in the outer rim **33.** The threaded passageways **98a, 98b** in the outer rim **33** form a second, inner row of threaded passageways, with the outer row of threaded passageways **81a, 81b** for securing the clamping arrangement **73** to the outer rim with fasteners **79a** (FIG. 7).

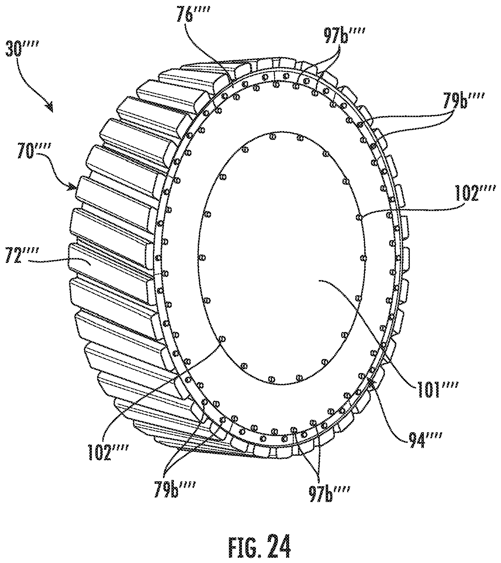

Referring now to FIG. 24, in another embodiment, the outboard removable sidewall **94ʺʺ** may have a removable inner panel **101ʺʺ** that when removed, by way of respective fasteners **102ʺʺ,** permit access to inner interior of the wheel assembly **30ʺʺ,** for example, the inner rim. Similar to the outboard removable sidewall described above, the outboard sidewall **94ʺʺ** couples by way of fasteners **97bʺʺ** to the outer rim **33ʺʺ** inside of or adjacent the outboard clamping members **76ʺʺ** (which are secured to the outer rim also by way of fasteners **79bʺʺ**). Elements illustrated but not specifically described are similar to those described above.

As will be appreciated by those skilled in the art, the inboard and outboard removable sidewalls **93, 94** may be particularly advantageous for reducing the amount of dust and/or debris within the interior of the wheel assembly **30,** for example, between the inner and outer rims **31, 33.** Accordingly, elements of the wheel assembly **30,** for example, the disk **40** and gas springs **50,** may have increased protection against damage, for example, from environmental elements (e.g., rocks, dust, dirt, water, etc.), and thus may have a longer service life. In some embodiments, the wheel assembly **30** may not include the inboard and outboard removable sidewalls **93, 94.**

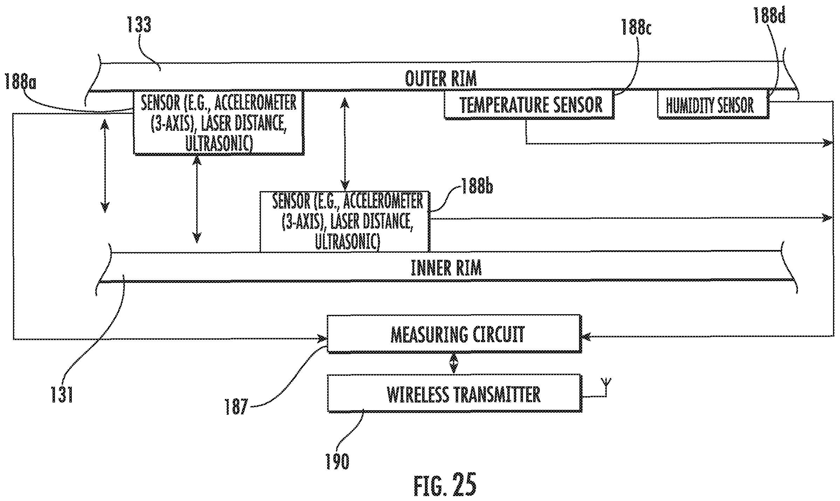

Referring now to FIG. 25, in another embodiment, sensors **188a, 188b** sense relative movement, such as by sensing a distance between the inner rim **131** and the outer rim **133.** More particularly, the sensors **188a, 188b** may be in the form of three-axis accelerometers. Of course, the sensors **188a, 188b** may be other types of sensors, for example, laser distance sensors, ultrasonic sensors, linear variable differential transformer (LVDT) sensors, and/or other contact or non-contact displacement sensors.

When the sensors **188a, 188b** are in the form of three-axis accelerometers, one of the accelerometers is carried by the inner rim **131** defining an inner accelerometer, while another accelerometer is carried by the outer rim **133** defining an outer accelerometer. The inner and outer accelerometers **188a, 188b** are aligned by way of their axes so that relative movement of the inner and outer rims **131, 133** as a sensed acceleration can be translated, for example, by way of a distance measuring circuit **187** coupled to the accelerometers **188a, 188b** (e.g., integrating each acceleration).

The sensors **188a, 188b** may each be different from one another. For example, an ultrasonic sensor may be used with the inner and outer accelerometers **188a, 188b** to sense or measure displacement (e.g., tangential to the inner and outer accelerometers). Of course, a laser distance sensor may be used as an alternative to the ultrasonic sensor or in conjunction with the ultrasonic sensor and/or the inner and outer accelerometers **188a, 188b.** The measuring circuit **187** may be carried by the wheel assembly, the vehicle, or remote from the vehicle.

A temperature sensor **188c** may be carried by the outer rim **133** (e.g., within or on an inner surface of the outer rim) and coupled to the measuring circuit **187** to sense a temperature within the wheel assembly, for example, when a cover or inboard or outboard removable sidewalls are used. A humidity sensor **188d** may alternatively or additionally be carried by the outer rim **133** (e.g., within or on an inner surface of the outer rim) and coupled to the measuring circuit **187** to sense humidity within the wheel assembly, for example, when a cover or inboard or outboard removable sidewalls are used. Data representing the humidity, acceleration or distance data (e.g., raw data or processed), and/or temperature may be remotely communicated from the wheel assembly or vehicle via a wireless transmitter **190** coupled to the measuring circuit **187** for downstream processing.

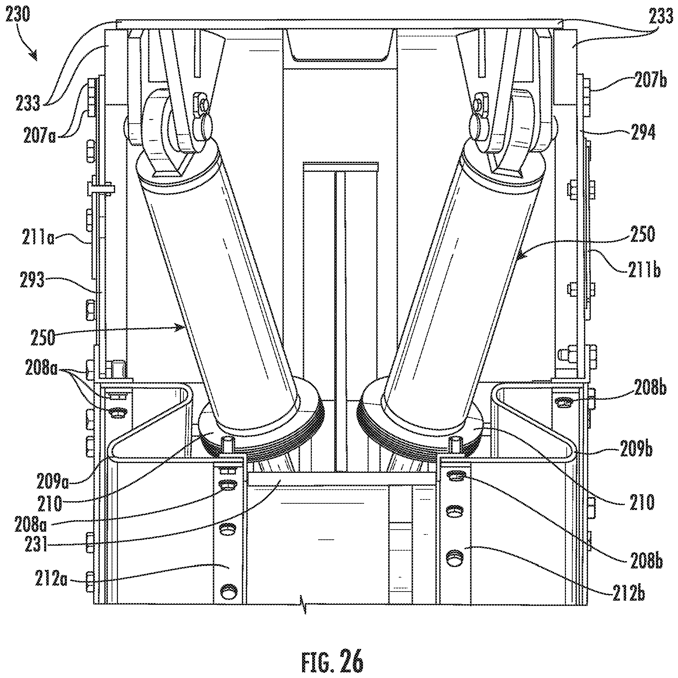

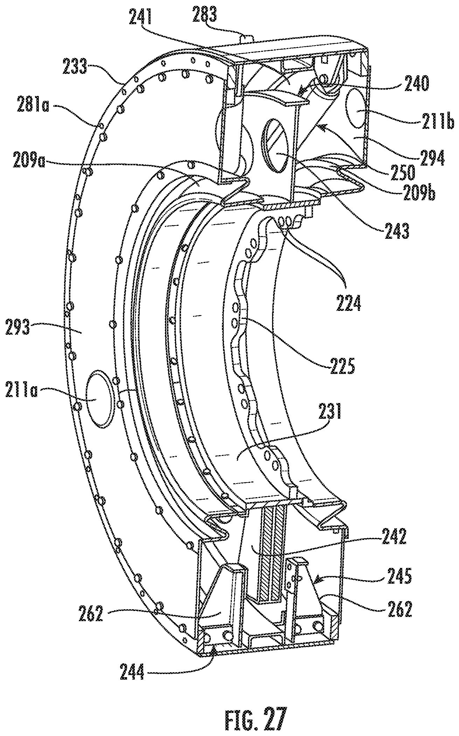

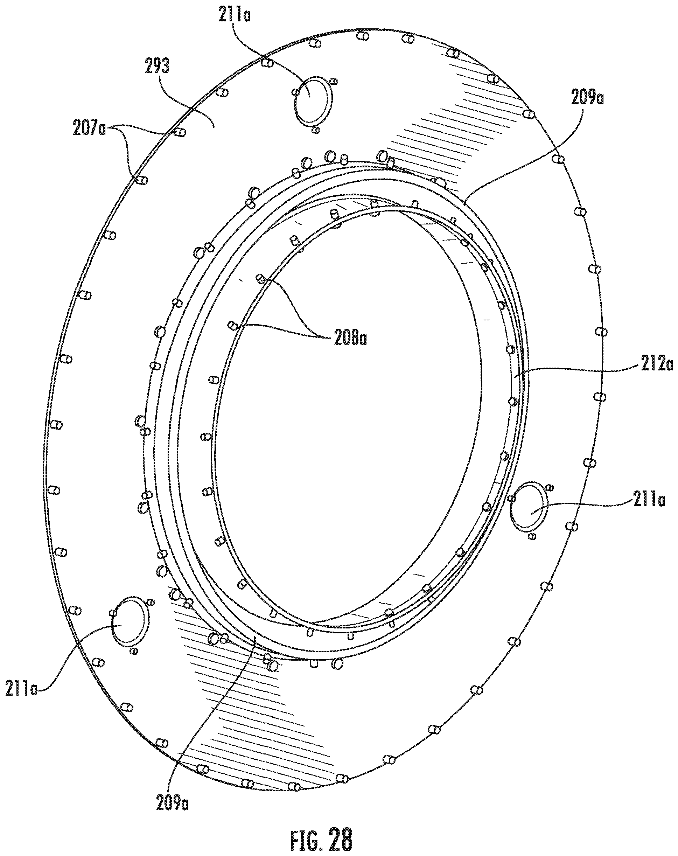

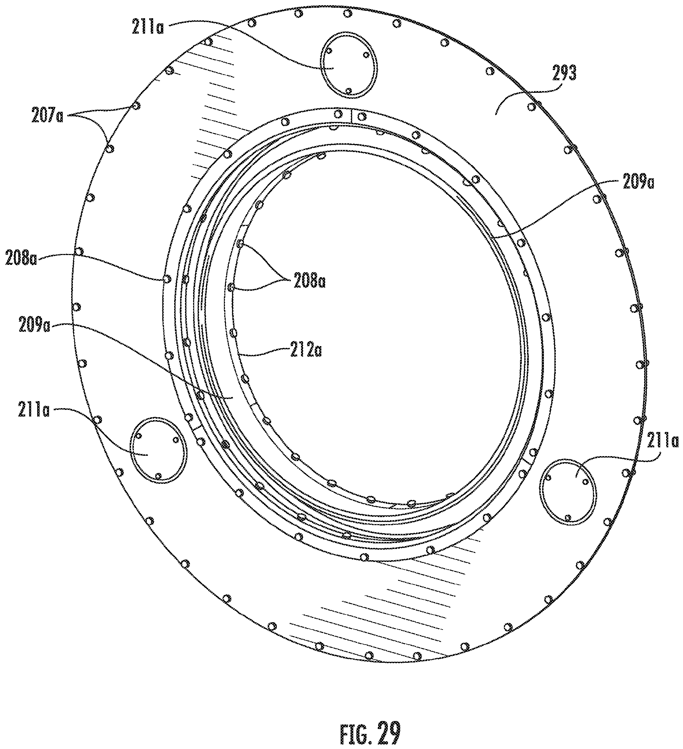

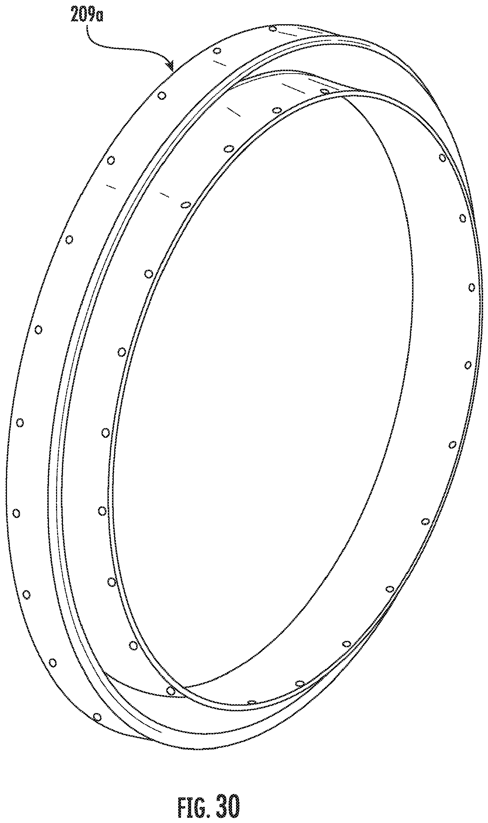

Referring now to FIGS. 26-31, in another embodiment, the wheel assembly **230** includes a rigid inboard cover ring **293** coupled to an inboard side of the outer rim **233,** for example, by way of fasteners **207a.** The rigid inboard cover ring **293** extends radially inward toward the inner rim **231.** More particularly, the rigid inboard cover ring **293** defines a radially and axially extending inboard gap with the inner rim **231.** A flexible inboard seal **209a,** for example, in the form of an inboard bellows seal, is coupled between the rigid inboard cover ring **293** and the inner rim **231,** for example, by way of respective fasteners **208a** to couple to the inner rim (e.g., used with a clamping arrangement **212a,** such as, for example, metal banding or other material). The flexible inboard seal **209a** closes the radially and axially extending inboard gap and permits relative movement of the inner rim **231** and the outer rim **233.** Illustratively, the inboard bellows seal **209a** has a Z-shaped cross-section. The flexible inboard seal **209a** may be a different kind of flexible seal, for example, and may have a different shaped cross-section. The flexible inboard seal **209a** may include rubber and/or an elastomeric material. The flexible inboard seal **209a** may include other and/or additional materials.

The wheel assembly **230** also includes a rigid outboard cover ring **294** coupled to an outboard side of the outer rim **233,** for example by way of fasteners **207b.** The rigid outboard cover ring **294** extends radially inward toward the inner rim **231.** More particularly, the rigid outboard cover ring **294** defines a radially and axially extending outboard gap with the inner rim **231.** A flexible outboard seal **209b,** for example, in the form of an outboard bellows seal, is coupled between the rigid outboard cover ring **294** and the inner rim **231,** for example, by way of respective fasteners **208b** (and respective clamping arrangement **212b,** for example). The flexible inboard seal **209b** closes the radially and axially extending outboard gap and permits relative movement of the inner rim **231** and the outer rim **233.** Illustratively, the outboard bellows seal **209a** has a Z-shaped cross-section. The flexible outboard seal **209b** may be a different kind of flexible seal, for example, and may have a different shaped cross-section.

Still further, a respective pleated cover **210** (e.g., bellows), is coupled to each of the gas springs **250.** In particular, the pleated covers **210** cover the piston so that dust, dirt, and/or debris may be kept from the piston (FIG. 26). A reduced amount of dust, dirt, and/or debris in contact with the piston may increase the operational lifespan of the gas springs **250,** as will be appreciated by those skilled in the art.

The flexible outboard seal **209b** may include rubber and/or an elastomeric material. The flexible outboard seal **209b** may include other and/or additional materials. A rigid outboard cover ring **294** and a flexible outboard seal **209b** may not be used in some embodiments. Elements illustrated but not specifically described are similar to the elements described in the above-embodiments, thus the description thereof need not be repeated.

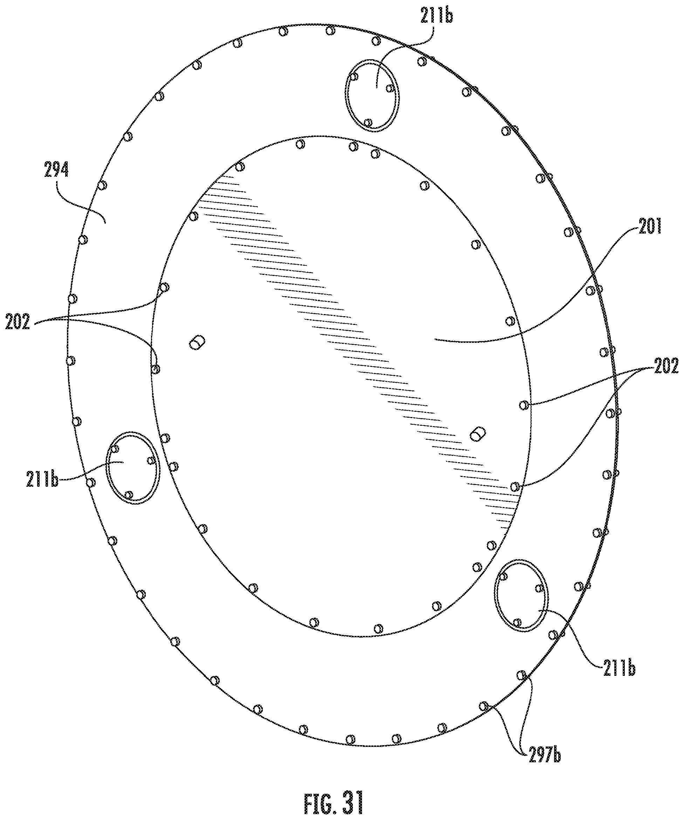

Referring now particularly to FIG. 31, similar to the embodiments described above with respect to FIGS. 22-24, a rigid removable inset panel or inner panel **201** may be carried within the rigid outboard cover ring **294** (e.g., secured to the wheel assembly by way of fasteners **297b**) so that when removed, by way of respective fasteners **202,** permits access to inner interior of the wheel assembly **230,** for example, the inner rim. Access ports or removable covers **211a** are spaced apart within the rigid outboard cover ring **294.** The removable covers **211a** may be clear acrylic, for example, to permit visual inspection within the wheel assembly without removing the rigid removable inset panel **201** and/or to permit ease of access to sensors, controller, and/or other circuitry, for example, as described above. A similar arrangement including the access ports or removable covers **211b** may be used as the rigid inboard cover ring **294,** for example, as described above (FIGS. 26-27). The access ports **211a, 211b** may be not used in all embodiments.

The embodiments of the wheel assembly **30** described herein may be particularly advantageous with respect to a conventional pneumatic tire, for example, particularly on a relatively large vehicle (e.g., heavy machinery). A conventional pneumatic tire, for example, for heavy machinery has a relatively high cost and, in some environments, may have a relatively short usage life. Moreover, particularly with heavy machinery, a failure of a conventional tire may cause be associated with an increased chance of damage to the heavy machinery. Even still further, a failure of a conventional tire may cause the vehicle **20** to be inoperable or out of service for a relatively long time period, thus resulting in a financial loss and loss of productivity, particularly for certain types of vehicles or heavy machinery that operate around the clock.

The wheel assembly **30** may address these shortcomings of a conventional tire. More particularly, the wheel assembly **30** may have a lower operational cost with increased performance (e.g., by way of the controllable operating response of the gas springs **50**). Additionally, the wheel assembly **30** may be field serviceable, meaning that tread members **72** may be replaced in the field. Repairs, for example, in the case of failed gas springs **50,** may also be repaired in the field.

A method aspect is directed to a method of making a wheel assembly **30** to be coupled to a hub **21** of a vehicle **20.** The method includes operatively coupling a plurality of gas springs **50** between an inner rim **31** to be coupled to the hub **21** of the vehicle **20** and an outer rim **33** surrounding the inner rim. The method also includes mounting a plurality of tread assemblies **70** to the outer rim **33.** Each tread assembly **70** may be mounted by bonding at least one tread member **72** to a tread member support **71** and positioning a clamping arrangement **73** to removably secure the tread member support to the outer rim **33.**

Another method aspect is directed to a method of making wheel assembly **30** to be coupled to a hub **21** of a vehicle **20.** The method includes operatively coupling a plurality of gas springs **50** between an inner rim **31** to be coupled to the hub **21** of the vehicle **20** and an outer rim **33** surrounding the inner rim **31** to provide a gas suspension for relative movement between the inner rim and the outer rim. The method also includes coupling a disk **40** to the inner rim **31** that defines a closeable gap **41** with adjacent interior portions of the outer rim **33** to define a mechanical stop to limit relative movement of the inner rim and outer rim.

Another method aspect is directed to a method of making a wheel assembly **30** to be coupled to a hub **21** of a vehicle **20.** The method includes operatively coupling a plurality of gas springs **50** operatively between an inner rim **31** to be coupled to the hub **21** of a vehicle **20** and an outer rim **33** surrounding the inner rim to provide a gas suspension for relative movement between the inner rim and the outer rim. The method also includes coupling a disk **40** coupled to the inner rim **31** and defining a closeable gap **41** with adjacent interior portions of the outer rim **33.** The method may further include positioning a plurality of inboard lateral stops **44** carried by an inboard interior surface of the outer rim **33,** and positioning plurality of outboard lateral stops **45** carried by outboard interior surface of the outer rim so that the plurality of inboard lateral stops and plurality of outboard lateral stops cooperate to limit relative lateral movement of the disk **40** and the outer rim.

Another method aspect is directed to a method of making a wheel assembly **30** to be coupled to a hub **21** of a vehicle **20.** The method includes operatively coupling a plurality of gas springs **50** between an inner rim **31** to be coupled to the hub **21** of the vehicle **20** and an outer rim **33** surrounding the inner rim. At least one gas spring **50** from among the plurality thereof has a controllable operating response. The method also includes coupling a local controller **87** to the at least one gas spring **50** to control the operating response of the at least one gas spring.

Another related method aspect is directed to a method of operating a wheel assembly **30** to be coupled to a hub **21** of a vehicle **20.** The wheel assembly **30** includes an inner rim **31** to be coupled to the hub **21** of the vehicle **20,** an outer rim **33** surrounding the inner rim, and a plurality of gas springs **50** operatively coupled between the inner rim and the outer rim. At least one gas spring **50** from among the plurality thereof has a controllable operating response. The method includes operating a local controller **87** coupled to the at least one gas spring **50** to control the operating response of the at least one gas spring.

Another method aspect is directed to a method of sensing relative movement, e.g. a distance, between an inner rim **131** of a wheel assembly **30** to be coupled to a hub **21** of a vehicle **20** and an outer rim **133** of the wheel assembly. The inner rim **131** is to be coupled to the hub **21** of a vehicle **20** and the outer rim **133** surrounding the inner rim. The wheel assembly **30** includes a plurality of gas springs **50** operatively coupled between the inner rim **131** and the outer rim **133** and permitting relative movement therebetween. The method includes using at least one sensor **188a, 188b** to sense the relative movement between the inner and outer rims **131, 133** during operation or rolling of the wheel assembly.

Another method aspect is directed to a method of making a wheel assembly **30** to be coupled to a hub **21** of a vehicle **20.** The method includes coupling an inner rim **231** to be to the hub **21** of the vehicle **20** and positioning an outer rim **233** surrounding the inner rim. The method also includes operatively coupling a plurality of gas springs **50** between the inner rim **231** and the outer rim **233** to permit relative movement therebetween. The method further includes coupling a rigid inboard cover ring **293** to an inboard side of the outer rim **233** and extending radially inward toward the inner rim **231** and coupling a flexible inboard seal **209a** between the rigid inboard cover ring and the inner rim.

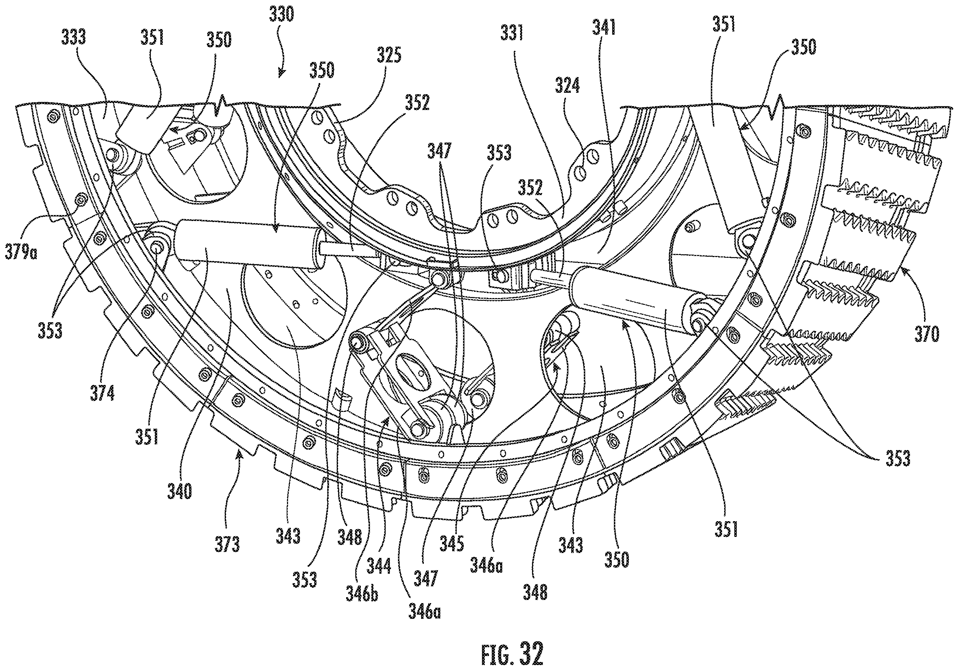

Referring now to FIG. 32, in another embodiment of the wheel assembly **330,** an outer ring **340** or disk is coupled to the outer rim **333.** This is in contrast to embodiments described above where the ring or disk **40** is coupled to the inner rim **331.** In the present embodiments, the outer ring **340** being coupled to the outer rim **333** defines a closeable gap **341** with adjacent interior portions of the inner rim **331** to define a mechanical stop to limit relative movement of the inner and outer rims. Similarly to the embodiments described above, the outer rim **333** may have a diameter of at least 3.5 feet.

Similarly to the embodiments above, the outer ring **340** also includes weight-reduction openings **343** therein. The weight-reduction openings **343** each illustratively have a generally round or circular shape. The weight-reduction openings **343** may have another shape, such as oblong, hexagonal, and/or contoured for stress reduction, for example.

Gas springs **350** are operatively coupled between the inner rim **331** and the outer rim **333.** Each gas spring **350** may be a double-acting gas spring, for example, and include a double-acting gas cylinder **351** and an associated piston **352.** Of course, in some embodiments, each gas spring **350** may be a single-acting gas spring. More than one type of gas spring **350** may be used. The gas springs **350** may be air springs and/or nitrogen springs, for example. The gas springs **350** may include other gasses as well.

Illustratively, the gas springs **350** are arranged in pairs on opposite sides of the outer ring **340.** More particularly, the gas springs **350** diverge outwardly from the inner rim **331** to the outer rim **333.** A respective attachment bracket **353** for each gas spring **350** is coupled to the inner rim **331.** Each attachment bracket **353** may include a generally U-shaped or V-shaped base bracket that receives an end of the piston **352** therein (e.g., between the arm of the U- or V-shaped bracket). A fastener fastens the end of the piston **352** of the gas spring **350** to the base bracket **353.** A similar attachment bracket **353** is coupled to the outer rim **333** adjacent inboard and outboard surfaces. Accordingly, the gas springs **350** are pivotably coupled between the inner and outer rims **331, 333**.

Similar to the embodiments described above, as will be appreciated by those skilled in the art, the gas springs **350** provide a gas suspension for relative movement between the inner rim **331** and the outer rim **333.** The gas springs **350** have an operating stroke the permits the outer ring **340** to define a mechanical stop. In other words, the gas springs **350** maintain the outer rim **333** spaced apart from the inner rim **331.** However, if pressure on any gas spring **350** causes the gas spring to reach its limit under load or the gas spring fails, the outer ring **340** may act as a mechanical stop to limit relative movement of the inner and outer rims **331, 333.** In other words, the outer ring **340** and gas springs **350** may be considered as providing a run-flat capability. Since the gas springs **350** are similar to the gas springs described with respect to the embodiments above, further details of the gas springs need not be described.

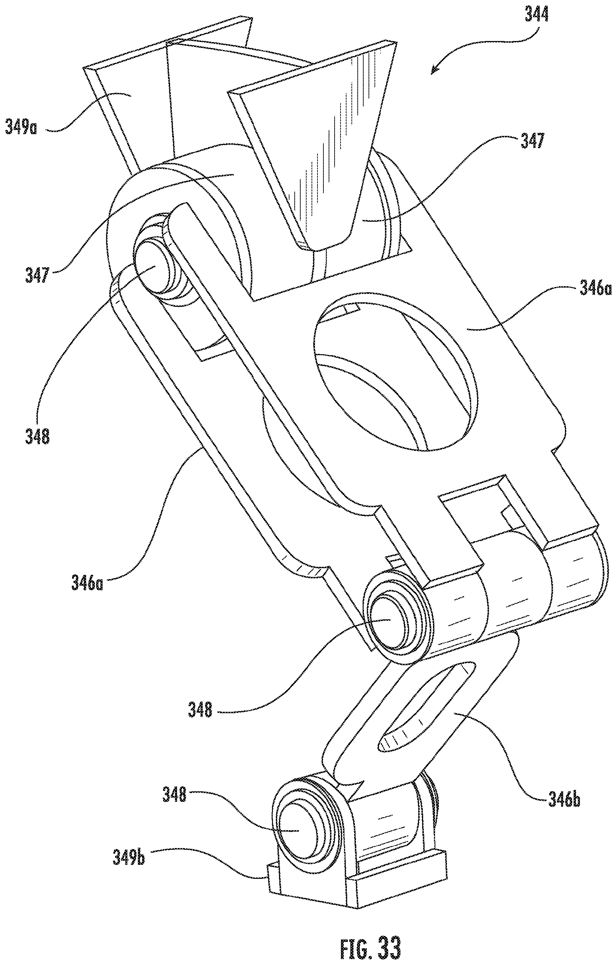

Referring additionally to FIG. 33, the wheel assembly **330** also includes inboard lateral stops **344** coupled between an inboard side of the outer rim **333** and an inboard side of the inner rim **331.** More particularly, the inboard lateral stops **344** are illustratively in the form of hinge retainers or scissor hinges. Each inboard lateral stop **344** includes inboard hinge brackets **346a, 346b** and inboard elastomeric bodies **347,** for example, urethane bodies, carried by the hinge bracket adjacent the outer rim **333.** More particularly, the inboard elastomeric bodies **347** couple to an outer lateral stop mounting bracket **349a** that is coupled to the outer rim **333.** The inboard hinge brackets **346a, 346b** are coupled by way of a hinge pin **348.** In some embodiments, an outer lateral stop mounting bracket **349a** may not be used as the inboard elastomeric bodies **347** may couple, for example, directly, to the outer ring **340,** for example, by way of a hinge pin **348.** The hinge bracket **346b** is coupled to the inner rim **331** by way of an inner lateral stop mounting bracket **349b** coupled to the inner rim by a hinge pin **348** coupled to the inner lateral stop mounting bracket. In some embodiments, the hinge bracket **346b** may couple to the inner rim 331 without an inner lateral stop mounting bracket **349b,** for example, directly to the inner rim by way of a hinge pin **348.**

The wheel assembly **330** also includes outboard lateral stops **345** coupled between an outboard side of the outer rim **333** and an outboard side of the inner rim **331.** More particularly, the outboard lateral stops **345** are illustratively in the form of hinge retainers or scissor hinges that are similar to the inboard lateral stops **344.** That is, each outboard lateral stop **345** includes outboard hinge brackets **346a, 346b** and outboard elastomeric bodies **347,** for example, urethane bodies, carried by the hinge bracket adjacent the outer rim **333.** More particularly, the outboard elastomeric bodies **347** couple to an outer lateral stop mounting bracket **349a** that is coupled to the outer rim **333.** The hinge brackets **346a, 346b** are coupled by way of a hinge pin **348.** In some embodiments, an outer lateral stop mounting bracket **349a** may not be used as the outboard elastomeric bodies **347** may couple, for example, directly, to the outer ring **340,** for example, by way of a hinge pin **348.** The hinge bracket **346b** is coupled to the inner rim **331** by way of an inner lateral stop mounting bracket **349b** coupled to the inner rim by a hinge pin **348** coupled to the inner lateral stop mounting bracket. In some embodiments, the hinge bracket **346b** may couple to the inner rim **331** without an inner lateral stop mounting bracket **349b,** for example, directly to the inner rim by way of a hinge pin **348.**

Those skilled in the art will appreciate that the inboard and outboard lateral stops **344, 345,** similarly to the lateral stops described with respect to the embodiments above, limit relative movement of the outer rim **333** (and thus the outer ring **340)** and the inner rim **331.** In other words, turning, for example, of the vehicle may cause lateral movement of the outer ring **340** relative to the inner rim **331.** The inboard and outboard lateral stops **344, 345** may limit the amount of lateral movement of the outer ring **340** relative to the inner rim **331** to thereby maintain structural integrity of the wheel assembly **330.** Of course, the inboard and outboard lateral stops **344, 345** may include other and/or additional components or elements that cooperate to limit relative lateral movement of the outer ring **340** and the outer inner rim **331.**

Other elements illustrated, such as, for example, fastener receiving passageways **324** within inwardly extending flange ring **325,** the tread assemblies **370,** and the clamping arrangement **373** including the inboard clamping members **374** and fasteners **379a**, are similar to corresponding elements described with respect to the embodiments described above. Accordingly, these elements as they relate to the present embodiments need no further discussion.

A method aspect is directed to method of making a wheel assembly **330** to be coupled to a hub of a vehicle. The method includes operatively coupling a plurality of gas springs **350** between an inner rim **331** to be coupled to the hub of the vehicle and an outer rim **333** surrounding the hub to provide a gas suspension for relative movement between the inner rim and the outer rim. The method may also include coupling an outer ring **340** to the outer rim **333** that defines a closeable gap **341** with adjacent interior portions of the inner rim to define a mechanical stop to limit relative movement of the inner rim and outer rim.

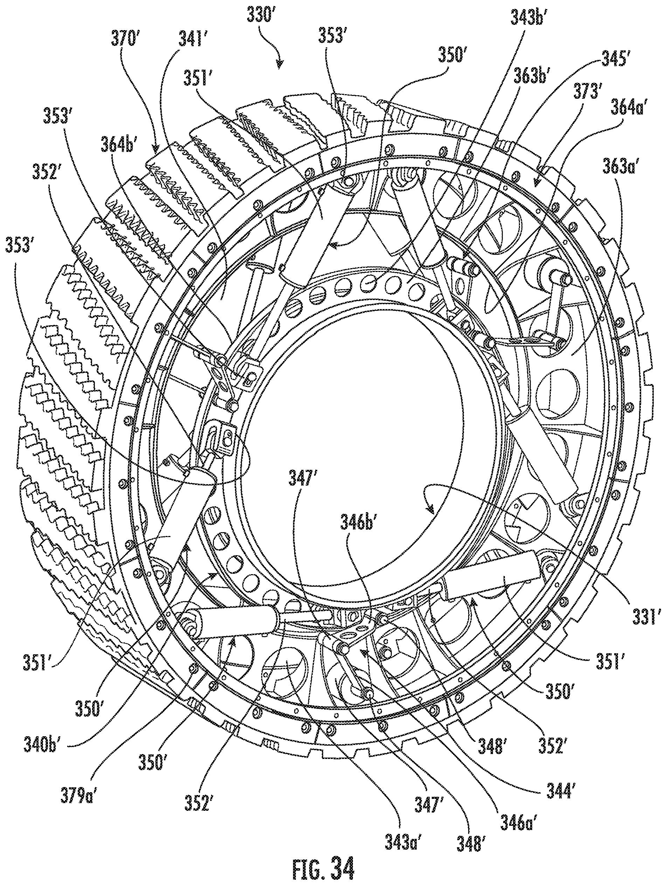

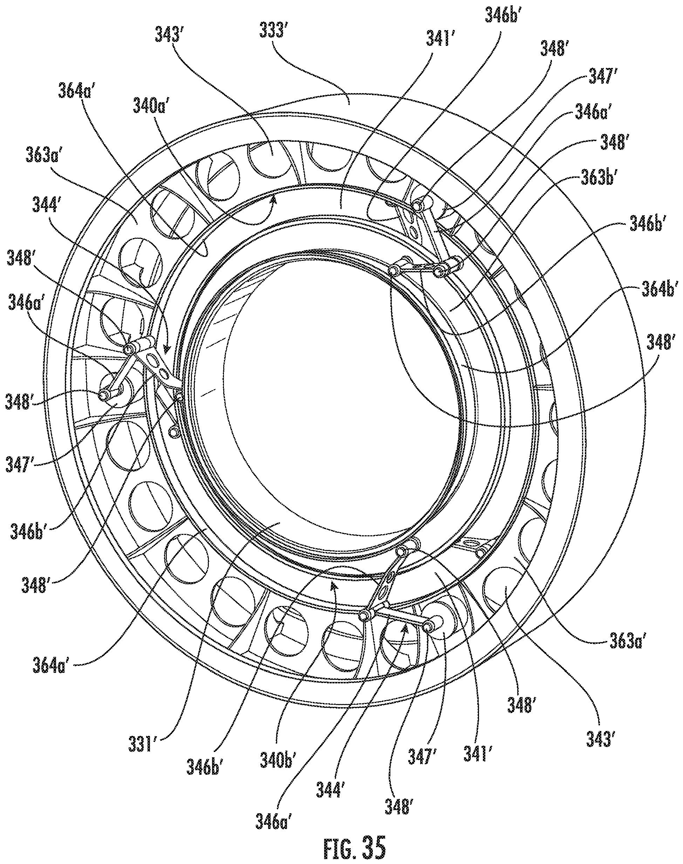

Referring now to FIGS. 34-35, in another embodiment of the wheel assembly **330',** an outer ring **340a'** is coupled to the outer rim **333'** and an inner ring **340b'** is coupled to the inner rim **331'.** The inner ring **340b'** defines a closeable gap **341'** with adjacent portions of the outer ring **340a'** to define a mechanical stop to limit relative movement of the inner and outer rims **331', 333'.** Similarly to the embodiments described above, the outer rim **333'** may have a diameter of at least 3.5 feet.

The outer ring **340a'** has an outer ring body **363a'** and an outer ring edge cap **364a'** carried by an inner edge of the outer ring body. The inner ring **340b'** also includes an inner ring body **363b'** and an inner ring edge cap **364b'** carried by an outer edge of the inner ring body. The inner and outer ring edge caps **364a', 364b'** provide an increased surface area mechanical stop to limit the relative movement of the inner and outer rims **331', 333'.**

Similarly to the embodiments above, the outer ring **340a'** also includes weight-reduction openings **343a'** therein. The inner ring **340b'** also includes weight-reduction openings **343b'** therein. The weight-reduction openings **343a', 343b'** each illustratively have a generally round or circular shape. The weight-reduction openings **343a', 343b'** may have another shape, such as oblong, hexagonal, and/or contoured for stress reduction, for example.

Gas springs **350'** are operatively coupled between the inner rim **331'** and the outer rim **333'**. Each gas spring **350'** may be a double-acting gas spring, for example, and include a double-acting gas cylinder **351'** and an associated piston **352'.** Of course, in some embodiments, each gas spring **350'** may be a single-acting gas spring. More than one type of gas spring **350'** may be used. The gas springs **350'** may be air springs and/or nitrogen springs, for example. The gas springs **350'** may include other gasses as well.

Illustratively, the gas springs **350'** are arranged in pairs on opposite sides of the outer ring **340a'.** More particularly, the gas springs **350'** diverge outwardly from the inner rim **331'** to the outer rim **333'**. A respective attachment bracket **353'** for each gas spring **350'** is coupled to the inner ring **340b',** and more particularly, the inner ring body **363b'.** Each attachment bracket **353'** may include a generally U-shaped or V-shaped base bracket that receives an end of the piston **352'** therein (e.g., between the arm of the U- or V-shaped bracket). A fastener fastens the end of the piston **352'** of the gas spring **350'** to the base bracket. A similar attachment bracket **353'** is coupled to the outer rim **333'** adjacent inboard and outboard surfaces. Accordingly, the gas springs **350'** are pivotably coupled between the inner and outer rims **331', 333'.**

Similar to the embodiments described above, as will be appreciated by those skilled in the art, the gas springs **350'** provide a gas suspension for relative movement between the inner rim **331'** and the outer rim **333'**. The gas springs **350'** have an operating stroke the permits the outer ring **340a'** to define a mechanical stop. In other words, the gas springs **350'** maintain the outer rim **333'** spaced apart from the inner rim **331'**. However, if pressure on any gas spring **350'** causes the gas spring to reach its limit under load or the gas spring fails, the outer ring **340a'** may act as a mechanical stop to limit relative movement of the inner and outer rims **331', 333'.** In other words, the outer ring **340a'** and gas springs **350'** may be considered as providing a run-flat capability. Since the gas springs **350'** are similar to the gas springs described with respect to the embodiments above, further details of the gas springs need not be described.

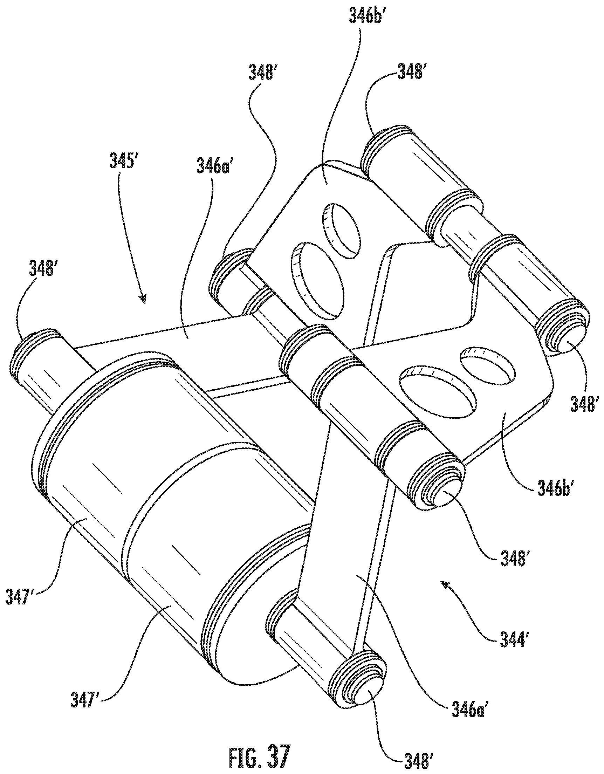

Referring additionally to FIG. 37, the wheel assembly **330'** also includes inboard lateral stops **344'** carried between an inboard side of the outer rim **333'** and an inboard side of the inner rim **331'.** More particularly, the inboard lateral stops **344'** are illustratively in the form of hinge retainers or scissor hinges. Each inboard lateral stop **344'** includes inboard hinge brackets **346a', 346b'** and an inboard elastomeric body **347',** for example, a urethane body, carried by the hinge bracket adjacent an inboard side of the outer ring **340a'.** The inboard elastomeric body **347'** couples to a wall portion of outer ring **340a'** by way of a hinge pin **348'**. The hinge brackets **346a', 346b'** are coupled together by way of a hinge pin **348'**. The hinge bracket **346b'** is coupled to a wall portion of the inner ring **340b'** by way of a hinge pin **348'.**

The wheel assembly **330'** also includes outboard lateral stops **345'** carried between an outboard side of the outer rim **333'** and an outboard side of the inner rim **331'.** More particularly, the outboard lateral stops **345'** are illustratively in the form of hinge retainers or scissor hinges. Each outboard lateral stop **345'** includes outboard hinge brackets **346a', 346b'** and an outboard elastomeric body **347',** for example, a urethane body, carried by the hinge bracket adjacent an outboard side of the outer ring **340a'.** The outboard elastomeric body **347'** couples to a wall portion of outer ring **340a'** opposite a corresponding portion of the inboard lateral stop **344'** by way of a hinge pin **348',** which may be shared with the hinge pin of the inboard lateral stop. The hinge brackets **346a', 346b'** are coupled by way of a hinge pin **348'.** The hinge bracket **346b'** is coupled to a wall portion of the inner ring **340b'** opposite the corresponding portion of the inboard lateral stop **344'** by way of a hinge pin **348',** which may be shared with the hinge pin of the inboard lateral stop. As will be appreciated by those skilled in the art, the inboard lateral stops **344'** are structurally similar to the outboard lateral stops **345',** just positioned opposite (i.e., on the inboard side) to the outboard lateral stops.

Those skilled in the art will appreciate that the inboard and outboard lateral stops **344', 345'** limit relative movement of the outer ring **340a'** and the inner ring **340b'.** In other words, turning, for example, of the vehicle may cause lateral movement of the outer ring **340a'** relative to the inner ring **340b'.** The inboard and outboard lateral stops **344', 345'** may limit the amount of lateral movement of the outer ring **340a'** relative to the inner ring **340b'** to thereby maintain structural integrity of the wheel assembly **330'.** Of course, the inboard and outboard lateral stops **344', 345'** may include other and/or additional components or elements that cooperate to limit relative lateral movement of the outer ring **340a'** and the outer inner rim **331'.**

Other elements illustrated, such as, for example, the tread assemblies **370'** and the clamping arrangement **373'** including the inboard clamping members **374'** and fasteners **379a',** are similar to corresponding elements described with respect to the embodiments described above. Accordingly, these elements as they relate to the present embodiments need no further discussion.

A method aspect is directed to a method of making a wheel assembly **330'** to be coupled to a hub of a vehicle. The method includes operatively coupling a plurality of gas springs **350'** between an inner rim **331'** to be coupled to the hub of the vehicle and an outer rim **333'** surrounding the hub to provide a gas suspension for relative movement between the inner rim and the outer rim. The method also includes coupling an outer ring **340a'** to the outer rim **333'** and coupling an inner ring **340b'** to the inner rim **331'** that defines a closeable gap **341'** with adjacent interior portions of the outer ring to define a mechanical stop to limit relative movement of the inner rim and outer rim.

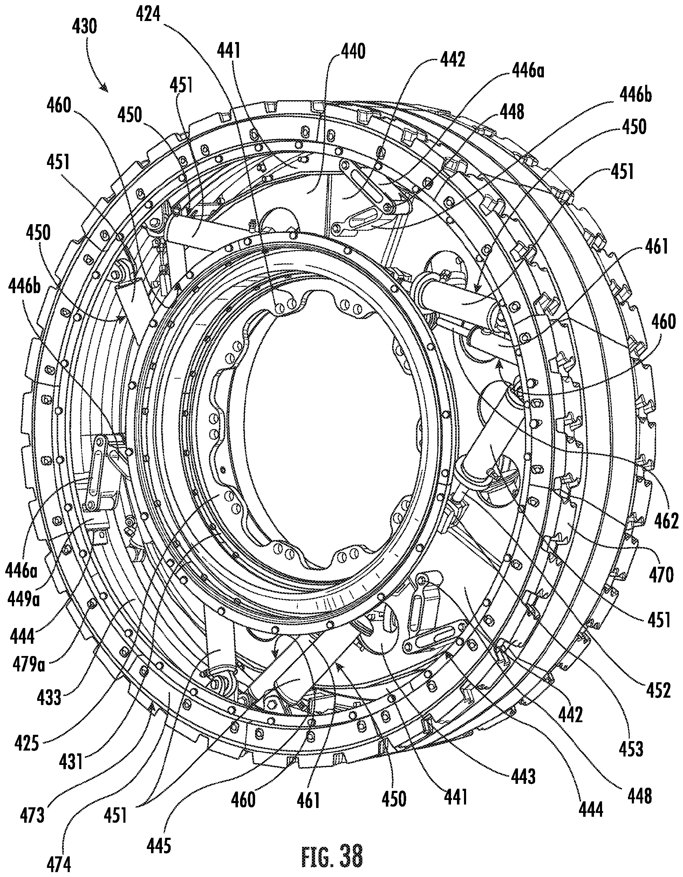

Referring now additionally to FIGS. 38-39 in another embodiment a wheel assembly **430** to be coupled, which wheel assembly is a preferred embodiment according to the present invention. The wheel assembly 430 includes an inner rim **431** to be coupled to the hub of the vehicle. The inner rim **431** may be coupled to the hub of the vehicle as described in the embodiments above.

The wheel assembly **430** also includes an outer rim **433** surrounding the inner rim **431.** The outer rim **433,** similarly to the embodiments described above, may have a diameter of at least 106.7 cm (3.5 feet), and more particularly, at least 121.9 cm (4 feet).

An inner ring **440** is coupled to the inner rim **431** and defines a closeable gap **441** with adjacent interior portions of the outer rim **433.** The inner ring **440,** which is similar to the disk described in the above embodiments, also includes weight-reduction openings **443** therein. The weight-reduction openings **443** each illustratively have a generally round or circular shape. The weight-reduction openings **443** may have another shape, such as oblong, hexagonal, and/or contoured for stress reduction, for example. Those skilled in the art will appreciate that having a reduced weight may increase the fuel efficiency of the vehicle and/or may increase the lifespan of the wheel assembly **430.**

The inner ring **440** also includes spaced apart thickened wall portions **442.** The spaced apart thickened wall portions **442** may be on both the inboard and outboard surfaces of the inner ring **440.** Each thickened wall portion **442** may provide increased strength or support as a coupling or attachment point, for example, as described in the embodiments herein.

Gas springs **450** are operatively coupled between the inner rim **431** and the outer rim **433.** Each gas spring **450** may be a double-acting gas spring, for example, and include a double-acting gas cylinder **451** and an associated piston **452.** Of course, in some embodiments, each gas spring **450** may be a single-acting gas spring. More than one type of gas spring may be used. The gas springs **450** may be air springs and/or nitrogen springs, for example. The gas springs **450** may include other gasses as well.

Illustratively, the gas springs **450** are arranged in pairs on opposite sides of the inner ring **440.** More particularly, the gas springs **450** diverge outwardly from the inner rim **431** to the outer rim **433.** A respective attachment bracket **453** for each gas spring **450** is coupled to a respective thickened wall portion **442** of the inner ring **440,** for example, adjacent the inner rim **431.** Similar to the embodiments described herein, each attachment bracket **453** may include a generally U-shaped or V-shaped base bracket that receives an end of the piston **452** therein (e.g., between the arm of the U- or V-shaped bracket). A fastener fastens the end of the piston **452** of the gas spring **450** to the base bracket and thus, each gas spring is coupled adjacent the respective thickened wall portion **442** of the inner ring **440** and adjacent the inner rim **431.** A similar attachment bracket **453** is coupled to the outer rim **433** adjacent inboard and outboard surfaces. Accordingly, the gas springs **450** are pivotably coupled between the inner and outer rims **431, 433.**

Hydraulic dampers **460** are illustratively operatively coupled between the inner and outer rims **431, 433.** The hydraulic dampers **460** may be in the form of oil dampers, for example. Of course, all or some of the dampers may include other, additional, or different fluids therein. Each hydraulic damper **460** includes a double-acting hydraulic cylinder **461** and an associated piston **462.**

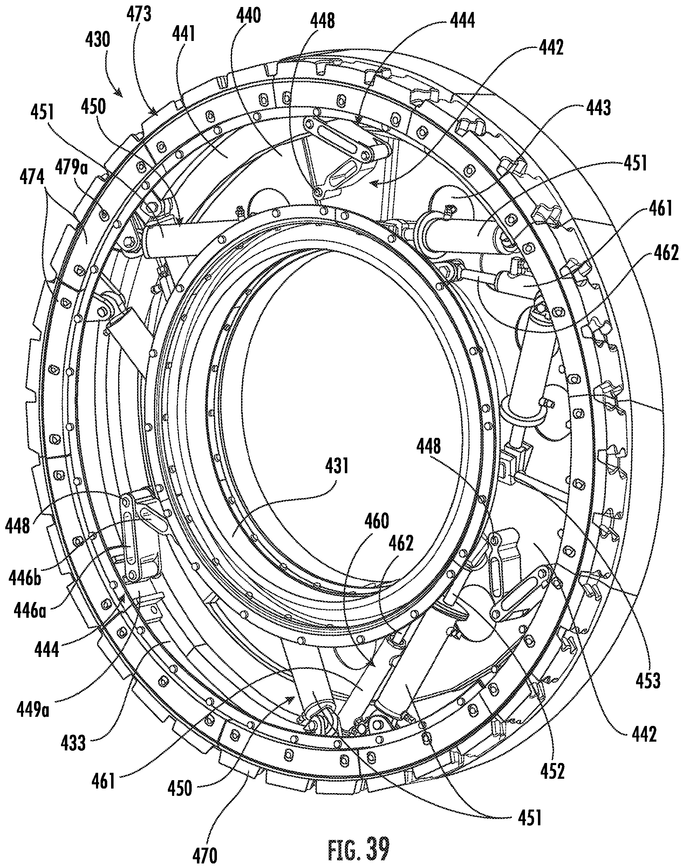

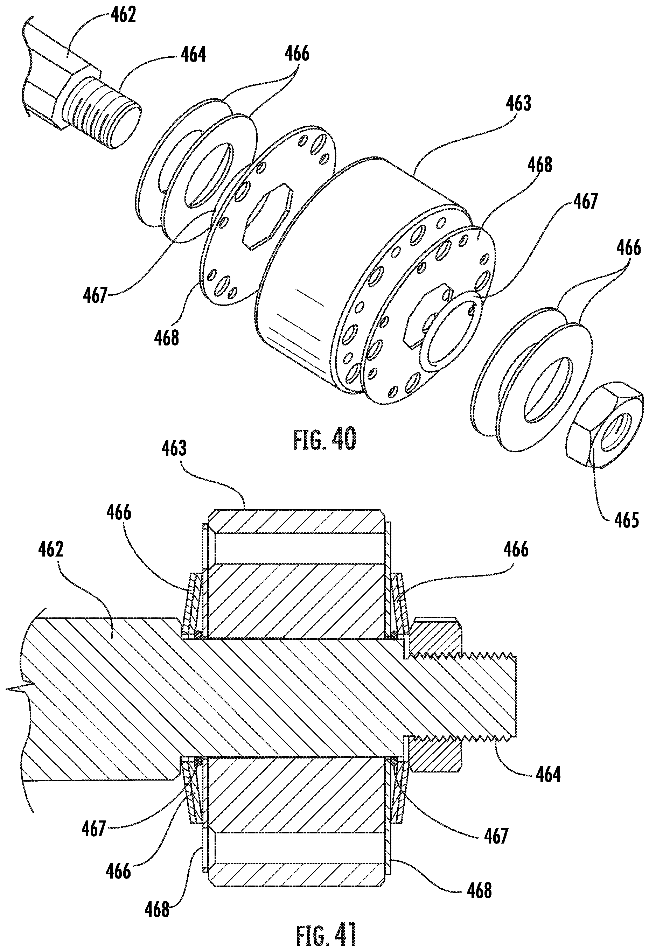

Referring now additionally to FIGS. 39 and 40, a piston head **463** is coupled to each piston **462.** More particularly, each piston **462** includes a threaded end **464** that extends within an opening in the piston head **463.** The piston head **463** is secured to the end of the piston **462** by way of a threaded fastener **465.** A reed valve **466,** seal (e.g., a gasket) **467** and piston end cap **468** are coupled on the opposing ends of the piston head **463.**

A respective hydraulic damper **460** is coupled adjacent a pair of gas springs **450** and staggered or alternatingly on opposing sides of the inner ring **440** (FIGS. 38 and 39). In other words, a first hydraulic damper **460** is coupled on a first side of the inner ring **440** between the inner and outer rims **431, 433** adjacent a first pair of gas springs **450,** another hydraulic damper is coupled on a second side of the inner ring between the inner and outer rims adjacent a second pair of gas springs, and so on. Thus, for a wheel assembly **430** that includes six (6) pairs of gas springs **450,** there would be six (6) hydraulic dampers **460,** three (3) on each side of the inner ring **440.**

Each hydraulic damper **460** is coupled to the outer rim **433** adjacent a pair of the gas springs **450** such that a given hydraulic damper is aligned side-by-side (e.g., about the same angle between the gas spring and the inner and outer rims **431, 433** or the coupling location) with one of the pair of gas springs **450.** Similarly to the gas springs **450,** respective mounting brackets **469a, 469b** couple each hydraulic damper **460** to the inner and outer rims **431, 433,** respectively.

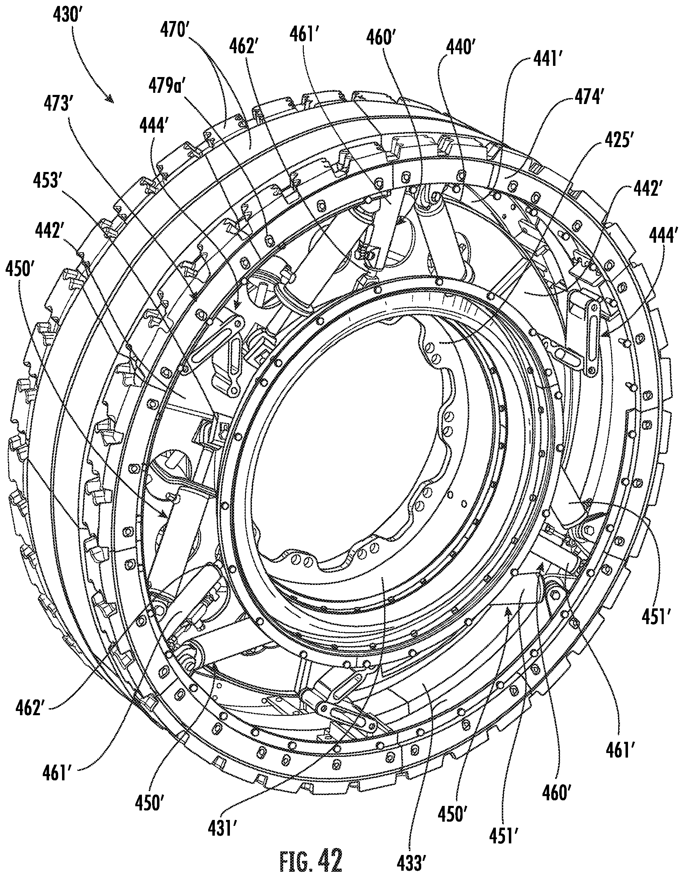

Referring briefly to FIG. 42, in another preferred embodiment of a wheel assembly 430 according to the present invention, a given hydraulic damper **460'** may be coupled between the gas springs **450'** of a given pair thereof so that the given hydraulic damper is not aligned with either of the gas springs (e.g., extends between the given pair of gas springs). Elements illustrated but not specifically described are similar to those elements described with respect to embodiments illustrated in FIGS. 38-41.

As will be appreciated by those skilled in the art, the hydraulic dampers **460** may dampen or reduce vibrations and movements caused by traversing the ground or by movement of the wheel assembly **430** over the ground. Moreover, as double-acting hydraulic dampers **460,** each hydraulic damper advantageously dampens on both extension and compression.

The wheel assembly **430** also includes inboard lateral stops **444** coupled between an inboard side of the outer rim **433** and an inboard side of the inner rim **431,** and more particularly, an inboard side of the inner ring **440.** More particularly, the inboard lateral stops **444** are illustratively in the form of hinge retainers or scissor hinges. Each inboard lateral stop **444** includes inboard hinge brackets **446a, 446b.** An outer lateral stop mounting bracket **449a** is coupled to the outer rim **433.** The inboard hinge brackets **446a, 446b** are coupled by way of a hinge pin **448.** In some embodiments, an outer lateral stop mounting bracket **449a** may not be used. The hinge bracket **446b** is coupled to the inner ring **440** by way of a hinge pin **448** coupled to the inner lateral stop mounting bracket. In some embodiments, for example, as described above, an inner lateral stop mounting bracket may couple the hinge bracket **446b** to the inner ring **440.**

The wheel assembly **430** also includes outboard lateral stops **445** coupled between an outboard side of the outer rim **433** and an outboard side of the inner rim **431,** and more particularly, to an outboard side of the inner ring **440.** More particularly, the outboard lateral stops **445** are illustratively in the form of hinge retainers or scissor hinges that are similar to the inboard lateral stops **444.** That is, similar to the inboard lateral stops **444,** each outboard lateral stop **445** includes outboard hinge brackets and an outer lateral stop mounting bracket coupled to the outer rim **433.** The hinge brackets are coupled by way of a hinge pin. In some embodiments, an outer lateral stop mounting bracket may not be used. The hinge bracket is coupled to the inner ring **440** by way of a hinge pin. In some embodiments, the hinge bracket may be coupled to the inner ring **440** by way of an inner lateral stop mounting bracket.

Those skilled in the art will appreciate that the inboard and outboard lateral stops **444, 445,** similarly to the lateral stops described with respect to the embodiments above, limit relative movement of the outer rim **433** (and thus the inner ring **440)** and the inner rim **431.**

Other elements illustrated, such as, for example, fastener receiving passageways **424** within inwardly extending flange ring **425** (FIG. 38), the tread assemblies **470,** and the clamping arrangement **473** including the inboard clamping members **474** and fasteners **479a,** are similar to corresponding elements described with respect to the embodiments described above. Accordingly, these elements as they relate to the present embodiments need no further discussion.

A method aspect is directed to a method of making a wheel assembly 430 to be coupled to a hub of a vehicle. The method includes operatively coupling a plurality of gas springs **450** between an inner rim **431** to be coupled to the hub of the vehicle and an outer rim **433** surrounding the hub to provide a gas suspension for relative movement between the inner rim and the outer rim. The method also includes operatively coupling a plurality of hydraulic dampers **460** between the inner rim **431** and the outer rim **433.**

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A wheel assembly (430) to be coupled to a hub of a vehicle, the wheel assembly comprising:
an inner rim (431) to be coupled to the hub of the vehicle;
an outer rim (433) surrounding the hub;
a plurality of gas springs (450) operatively coupled between said inner rim and said outer rim to provide a gas suspension for relative movement between said inner rim and said outer rim;
an inner ring (440) coupled to said inner rim (431)
**characterised in that**
the wheel assembly further comprises a plurality of hydraulic dampers (460) operatively coupled between said inner rim (431) and said outer rim (433) and wherein the inner ring (440) defines a closeable gap (441) with adjacent portions of said outer rim (433) to define a mechanical stop to limit relative movement of said inner rim (431) and said outer rim (433).

2. The wheel assembly of Claim 1 wherein said plurality of hydraulic dampers is arranged in a staggered relation on opposite sides of said inner ring (440).

3. The wheel assembly of Claim 1 wherein said plurality of gas springs are arranged in pairs on opposite sides of said inner ring (440).

4. The wheel assembly of Claim 1 wherein each hydraulic damper is coupled between said inner rim and said outer rim adjacent corresponding pairs of said plurality of gas springs.

5. The wheel assembly of Claim 4 wherein each hydraulic damper is aligned side-by-side with a corresponding one of said plurality of gas springs.

6. The wheel assembly of Claim 1 wherein each hydraulic damper is coupled to said outer rim between pairs of said plurality of gas springs.

7. The wheel assembly of Claim 1 wherein each hydraulic damper comprises an oil damper.

8. The wheel assembly of Claim 1 wherein each hydraulic damper comprises a double-acting hydraulic cylinder (461) and associated piston (462).

9. The wheel assembly of Claim 8 wherein each hydraulic damper comprises a piston head (463) coupled to said piston and at least one reed valve (466) adjacent said piston head.

10. The wheel assembly of Claim 1 comprising
a plurality of inboard lateral stops (444) coupled between an inboard side of said outer rim and an inboard side of said inner rim, and
a plurality of outboard lateral stops (445) coupled between an outboard side of said outer rim and an outboard side of said inner rim.

11. The wheel assembly of Claim 10 wherein said plurality of inboard lateral stops comprises a plurality of inboard hinge retainers; and wherein said plurality of outboard lateral stops comprises a plurality of outboard hinge retainers.

12. A method of making a wheel assembly (430) to be coupled to a hub of a vehicle, the method comprising:
operatively coupling a plurality of gas springs (450) between an inner rim (431) to be coupled to the hub of the vehicle and an outer rim (433) surrounding the hub to provide a gas suspension for relative movement between the inner rim and the outer rim;
**characterised in that**
the method further comprises:
operatively coupling a plurality of hydraulic dampers (460) between the inner rim and the outer rim; and
coupling an inner ring (440) to the inner rim (431) to define a closeable gap (441) with adjacent portions of said outer rim (433) to define a mechanical stop to limit relative movement of the inner rim (431) and the outer rim (433).

13. The method of Claim 12 wherein operatively coupling the plurality of hydraulic dampers comprises operatively coupling the plurality of hydraulic dampers in a staggered relation on opposite sides of the inner ring (440).

14. The method of Claim 12 wherein operatively coupling the plurality of gas springs comprises operatively coupling the plurality of gas springs in pairs on opposite sides of said inner ring (440).

15. The method of Claim 12 comprising coupling a plurality of inboard lateral stops (444) between an inboard side of said outer rim and an inboard side of said inner rim, and a plurality of outboard lateral stops (445) coupled between an outboard side of said outer rim and an outboard side of said inner rim.

## Patentansprüche

1. Radbaugruppe (430), die an eine Nabe eines Fahrzeugs gekoppelt werden soll, wobei die Radbaugruppe aufweist:
eine innere Felge (431), die an die Nabe des Fahrzeugs zu koppeln ist;
eine äußere Felge (433), die die Nabe umgibt;
mehrere Gasfedern (450), die betriebsfähig zwischen der inneren Felge und der äußeren Felge gekoppelt sind, um eine Gasfederung für eine relative Bewegung zwischen der inneren Felge und der äußeren Felge bereitzustellen;
einen Innenring (440), der an die innere Felge (431) gekoppelt ist,
**dadurch gekennzeichnet, dass**
die Radbaugruppe ferner mehrere hydraulische Dämpfer (460) aufweist, die betriebsfähig zwischen der inneren Felge und der äußeren Felge gekoppelt sind, und wobei der Innenring (440) einen verschließbaren Spalt (441) mit benachbarten Abschnitten der äußeren Felge (433) definiert, um einen mechanischen Anschlag zu definieren, um die relative Bewegung der inneren Felge (431) und der äußeren Felge (433) zu begrenzen.

2. Radbaugruppe nach Anspruch 1, wobei die mehreren hydraulischen Dämpfer in einer versetzten Beziehung auf gegenüberliegenden Seiten des Innenrings (440) angeordnet sind.

3. Radbaugruppe nach Anspruch 1, wobei die mehreren Gasfedern paarweise auf gegenüberliegenden Seiten des Innenrings (440) angeordnet sind.

4. Radbaugruppe nach Anspruch 1, wobei jeder hydraulische Dämpfer zwischen der inneren Felge und der äußeren Felge neben entsprechenden Paaren der mehreren Gasfedern gekoppelt ist.

5. Radbaugruppe nach Anspruch 4, wobei jeder hydraulische Dämpfer Seite an Seite mit einer entsprechenden der mehreren Gasfedern ausgerichtet ist.

6. Radbaugruppe nach Anspruch 1, wobei jeder hydraulische Dämpfer an die äußere Felge zwischen Paaren der mehren Gasfedern gekoppelt ist.

7. Radbaugruppe nach Anspruch 1, wobei jeder hydraulische Dämpfer einen Öldämpfer aufweist.

8. Radbaugruppe nach Anspruch 1, wobei jeder hydraulische Dämpfer einen doppelt wirkenden Hydraulikzylinder (461) und einen zugehörigen Kolben (462) aufweist.

9. Radbaugruppe nach Anspruch 8, wobei jeder hydraulische Dämpfer einen an den Kolben gekoppelten Kolbenkopf (463) und wenigstens ein Zungenventil (466) neben dem Kolbenkopf aufweist.

10. Radbaugruppe nach Anspruch 1, aufweisend:
mehrere innere seitliche Anschläge (444), die zwischen einer Innenseite der äußeren Felge und einer Innenseite der inneren Felge gekoppelt sind, und
mehrere äußere seitliche Anschläge (445), die zwischen einer Außenseite der äußeren Felge und einer Außenseite der inneren Felge gekoppelt sind.

11. Radbaugruppe nach Anspruch 10, wobei die mehreren inneren seitlichen Anschläge mehrere innere Scharnierhalter aufweisen; und wobei die mehreren äußeren seitlichen Anschläge mehrere äußere Scharnierhalter aufweisen.

12. Verfahren zum Herstellen einer Radbaugruppe (430), die an eine Nabe eines Fahrzeugs gekoppelt werden soll, wobei das Verfahren aufweist:
operatives Koppeln von mehreren Gasfedern (450) zwischen einer inneren Felge (431), die an die Nabe des Fahrzeugs zu koppeln ist, und einer äußeren Felge (433), die die Nabe umgibt, um eine Gasfederung für eine relative Bewegung zwischen der inneren Felge und der äußeren Felge bereitzustellen;
**dadurch gekennzeichnet, dass** das Verfahren ferner aufweist:
operatives Koppeln von mehreren hydraulischen Dämpfern (460) zwischen der inneren Felge und der äußeren Felge; und
Koppeln eines Innenrings (440) an die innere Felge (431), um einen verschließbaren Spalt (441) mit benachbarten Abschnitten der äußeren Felge (433) zu definieren, um einen mechanischen Anschlag zu definieren, um die relative Bewegung der inneren Felge (431) und der äußeren Felge (433) zu begrenzen.

13. Verfahren nach Anspruch 12, wobei das operative Koppeln der mehreren hydraulischen Dämpfer ein operatives Koppeln der mehreren hydraulischen Dämpfer in einer versetzten Beziehung auf gegenüberliegenden Seiten des Innenrings (440) aufweist.

14. Verfahren nach Anspruch 12, wobei das operative Koppeln der mehreren Gasfedern ein operatives Koppeln der mehreren Gasfedern paarweise auf gegenüberliegenden Seiten des Innenrings (440) aufweist.

15. Verfahren nach Anspruch 12, aufweisend ein Koppeln von mehreren inneren seitlichen Anschlägen (444) zwischen einer Innenseite der äußeren Felge und einer Innenseite der inneren Felge, und mehrere äußere seitliche Anschläge (445), die zwischen einer Außenseite der äußeren Felge und einer Außenseite der inneren Felge Randes gekoppelt sind.

## Revendications

1. Ensemble roue (403) à coupler à un moyeu d'un véhicule, l'ensemble roue comprenant :
une jante intérieure (431) à coupler au moyeu du véhicule ;
une jante extérieure (433) entourant le moyeu ;
une pluralité de ressorts à gaz (450) couplés fonctionnellement entre ladite jante intérieure et ladite jante extérieure pour fournir une suspension à gaz destinée à un mouvement relatif entre ladite jante intérieure et ladite jante extérieure ;
une bague intérieure (440) couplée à ladite jante intérieure (431),
**caractérisé en ce que** :
l'ensemble roue comprend en outre une pluralité d'amortisseurs hydrauliques (460) couplés fonctionnellement entre ladite jante intérieure (431) et ladite jante extérieure (433), et dans lequel la bague intérieure (440) définit un espace fermable (441) avec des portions adjacentes de ladite jante extérieure (433) pour définir une butée mécanique afin de limiter un mouvement relatif de ladite jante intérieure (431) et de ladite jante extérieure (433).

2. Ensemble roue selon la revendication 1, dans lequel ladite pluralité d'amortisseurs hydrauliques est disposée selon une relation échelonnée sur des côtés opposés de ladite bague intérieure (440).

3. Ensemble roue selon la revendication 1, dans lequel ladite pluralité de ressorts à gaz est disposée par paires sur des côtés opposés de ladite bague intérieure (440).

4. Ensemble roue selon la revendication 1, dans lequel chaque amortisseur hydraulique est couplé entre ladite jante intérieure et ladite jante extérieure à proximité immédiate de paires correspondantes de ladite pluralité de ressorts à gaz.

5. Ensemble roue selon la revendication 4, dans lequel chaque amortisseur hydraulique est aligné côte à côte sur l'un correspondant de ladite pluralité de ressorts à gaz.

6. Ensemble roue selon la revendication 1, dans lequel chaque amortisseur hydraulique est couplé à ladite jante extérieure entre des paires de ladite pluralité de ressorts à gaz.

7. Ensemble roue selon la revendication 1, dans lequel chaque amortisseur hydraulique comprend un amortisseur à huile.

8. Ensemble roue selon la revendication 1, dans lequel chaque amortisseur hydraulique comprend un cylindre hydraulique à double effet (461) et un piston associé (462).

9. Ensemble roue selon la revendication 8, dans lequel chaque amortisseur hydraulique comprend une tête de piston (463) couplée audit piston, et au moins un clapet lamellaire (466) adjacent à ladite tête de piston.

10. Ensemble roue selon la revendication 1, comprenant :
une pluralité de butées latérales internes (444) couplées entre un côté interne de ladite jante extérieure et un côté interne de ladite jante intérieure ; et
une pluralité de butées latérales externes (445) couplées entre un côté externe de ladite jante extérieure et un côté externe de ladite jante intérieure.

11. Ensemble roue selon la revendication 10, dans lequel ladite pluralité de butées latérales internes comprend une pluralité de dispositifs internes de retenue à charnière, et dans lequel ladite pluralité de butées latérales externes comprend une pluralité de dispositifs externes de retenue à charnière.

12. Procédé de fabrication d'un ensemble roue (430) à coupler à un moyeu d'un véhicule, le procédé consistant à :
coupler fonctionnellement une pluralité de ressorts à gaz (450) entre une jante intérieure (431) à coupler au moyeu du véhicule et une jante extérieure (433) entourant le moyeu afin de fournir une suspension à gaz destinée à un mouvement relatif entre la jante intérieure et la jante extérieure,
caractérisé en que le procédé consiste en outre à :
coupler fonctionnellement une pluralité d'amortisseurs hydrauliques (460) entre la jante intérieure et la jante extérieure ; et
coupler une bague intérieure (440) à la jante intérieure (431) pour définir un espace fermable (441) avec des portions adjacentes de ladite jante extérieure (433) pour définir une butée mécanique afin de limiter un mouvement relatif de la jante intérieure (431) et de la jante extérieure (433).

13. Procédé selon la revendication 12, dans lequel le couplage fonctionnel de la pluralité d'amortisseurs hydrauliques consiste à coupler fonctionnellement la pluralité d'amortisseurs hydrauliques selon une relation échelonnée sur des côtés opposés de la bague intérieure (440).

14. Procédé selon la revendication 12, dans lequel le couplage fonctionnel de la pluralité de ressorts à gaz consiste à coupler fonctionnellement la pluralité de ressorts à gaz par paires sur des côtés opposés de ladite bague intérieure (440).

15. Procédé selon la revendication 12, consistant à coupler une pluralité de butées latérales internes (444) entre un côté interne de ladite jante extérieure et un côté interne de ladite jante intérieure, et à coupler une pluralité de butées latérales externes (445) entre un côté externe de ladite jante extérieure et un côté externe de ladite jante intérieure.
